# EUROPEAN PATENT APPLICATION

(11) **EP 1 930 066 A1**
(43) Date of publication of application: **11.06.2008**
(21) Application number: 06783124.8
(22) Date of filing: 28.08.2006
(51) Int. Cl.: B01D 53/22, A23L 3/3418, A63B 41/12, B01D 63/08, B01D 63/14, B01D 63/16

(54) **GAS SEPARATOR AND GAS SEPARATING METHOD**

(30) Priority: 29.08.2005 JP 2005247874
(71) Applicant: Yoshida, Eiji, Tokyo 142-0041 (JP)
(72) Inventor: MORI, Akinori, Yamato-shi Kanagawa 242-0028 (JP)
(74) Representative: Garratt, Peter Douglas
(86) International application number: PCT/JP2006/316895
(87) International publication number: WO 2007/026656

(57) **Abstract**

There is provided a gas separating device which is capable of being made compact and light. A part of an airtight container (2) is constructed by a gas separating membrane (13), and a gas separating membrane (13) is constructed to be able to separate and discharge at least a part of a gas g1 included in a gas G to the outside of the airtight container (2) from the gas G. A gas outlet valve is constructed to allow the inside of the airtight container and the outside to communicate with each other to be able to discharge a gas g2 remaining in the inside of the airtight container (2) to the outside when the total pressure of the inside of the airtight container (2) becomes P2 (P2 > P1).

## Description

### 1. FIELD OF THE INVENTION

The present invention relates to a gas separating device and a gas separating method for separating a gas by a pressure difference caused between one side and the other side partitioned by a gas separating membrane.

### 2. DESCRIPTION OF THE RELATED ART

As a gas separating device using a gas separating membrane, there are the ones disclosed in Patent Documents 1 to 3. Each of the gas separating devices disclosed in Patent Documents 1 to 3 (hereinafter, generally and properly called "conventional gas separating devices") is constructed so that compressed air is supplied to a nitrogen separating membrane module from an air compressor to separate an oxygen gas and a nitrogen gas by the pressure difference caused between one side and the other side of the nitrogen separating membrane. Each nitrogen gas obtained by separation is used for being charged into automobile tires.
[Patent Document 1] Japanese Patent Application Laid-open No. 2002-1045 (see paragraphs 0014, 0015 and Fig. 1)
[Patent Document 2] Japanese Patent Application Laid-open No. 2004-17955 (see paragraph 0010 and Fig. 1)
[Patent Document 3] Japanese Patent Application Laid-open No. 2003-54918 (see paragraphs 0010, 0013, 0014 and Fig. 1)

However, since each of the conventional gas separating devices requires a compressor, the entire device generally increases in size and weight. There is also the problem in the respect that the structure is complicated. Since the conventional gas separating devices have their objects to charge a nitrogen gas into automobile tires, they are generally installed in gas stations, automobile repair factories and the like, and even if they are large and heavy, they have no problem for use. However, the use environments given to gas separating devices are various depending on the kind of a gas to be separated by the gas separating devices, the concentration of the gas, the separation amount and the like. For example, when a power failure occurs and when the devices are used outdoors, there is the possibility that the power supply for driving the compressor cannot be secured in some cases. In order to cope with various use environments like this, the compressors sometimes become encumbrances. The present invention is made to cope with the above described circumstances, and an object thereof to be achieved is to provide a gas separating device capable of being made compact and light, and being used without a power supply at times, and a gas separating method.

### SUMMARY OF THE INVENTION

In order to attain the above described object, the inventor contrived to increase or decrease the volumetric capacity of an airtight container which is partially or entirely composed of a gas separating membrane in order to generate the pressure difference, since the pressure difference is required between the one side and the other side with the gas separating membrane therebetween in order to perform gas separation by utilizing the gas separating membrane, and to thereby perform gas separation. The present invention is made from such a viewpoint. The detailed content will be described in the new paragraph. The interpretation which is performed on explanation of the invention described in any claim, the definition of the terms and the like shall be applied to the inventions described in other claims in the possible range in its property irrespective of the category of the invention.

### (Characteristic of the invention described in claim 1)

A gas separating device according to the invention described in claim 1 (hereinafter, properly called "the separating device of claim 1") is constructed by including an airtight container including an inside partitioned from an outside by a partition wall, a gas outlet valve provided at the partition wall, and a gas separating membrane constituting at least a part of the partition wall. The partition wall can be composed of, for example, a metal, a rigid or soft synthetic resin, and a packing (packing) or the like can be used as necessary for keeping airtightness. Any packing or the like is applicable to the partition wall in the present application as long as it partitions the container outside and the container inside. Decrease in the volumetric capacity of the inside of the container is realized by constructing a part of the partition wall to be movable with respect to the other part, constructing the partition wall to be elastically deformable by using flexibility of the partition wall itself, and constructing the partition wall by combining the movable construction and the elastically deformable construction. An external force can be caused to act manually, or by the means utilizing electric energy, positional energy and the like, whether it is direct or indirect. The shape of the airtight container is not limited, and an integrated whole that is composed of one airtight container and the other airtight container allowed to communicate with each other by a vent pipe or the like applies to the airtight container in the present application. The partition wall in the above described construction is constructed to move and/or deform at least partially by action of an external force to be able to decrease an internal volumetric capacity of the airtight container, and the gas separating membrane is constructed to be capable of separating and discharging at least a part of a gas g 1 included in a gas G to the outside of the airtight container from the gas G sealed in the inside of the container when total pressure P of the inside of the airtight container becomes total pressure P1 (P < P1) or higher due to decrease in the volumetric capacity. At least the gas g1 is separated from the gas G, and thereby, a gas g2 remains in the inside of the container. Here, the gas outlet valve is constructed to allow the inside of the airtight container and the outside to communicate with each other to be able to discharge the gas g2 remaining in the inside of the airtight container to the outside when the total pressure of the inside of the airtight container becomes P2 (P2 > P1) due to further decrease in the volumetric capacity of the inside of the airtight container. "The gas separating membrane" is a generic name of the membranes having the gas separating function. The shape of the air separating membrane is not especially limited, for example, a flat plate type, a hollow fiber type, a spiral type and the like are cited, and each of the gas separating membranes which constitutes them may have ups and downs on the surface due to bending, curving, change in thickness and the like. In the hollow fiber type gas separating membrane in the above described example, each of the hollow fibers corresponds to the partition wall constituting the airtight container, and its inside corresponds to the inside of the container. The materials composing the gas separating membrane include an organic material such as copolymer, an inorganic material such as silica, alumina, and carbon, a hybrid material combining an organic material and an inorganic material and the like, and also include materials made by including an additive or the like such as an adsorbent into these materials. The properties of the gas separating membrane (for example, a permeability coefficient, membrane thickness and membrane area) are properly set in accordance with the use purpose of the separating device, the kind, quantity, concentration and the like of the gas to be obtained by separation. The gas separating membrane of the same shape and material does not necessarily have to be used, but the one with the combination of the shapes, the materials and the like shown above as examples can be used. In the present application, "the total pressure" means the total sum of the respective gas partial pressures existing in the inside of the airtight container.

According to the separating device in claim 1, a pressure difference occurs inside and outside the airtight container via the gas separating membrane as the result that the gas G sealed in the inside of the airtight container rises to P1 from the total pressure P due to decrease in the volumetric capacity of the inside of the airtight container, and by this pressure difference, a part or all of the gas g1 is transmitted through the gas separating membrane to be separated and discharged to the outside of the airtight container. At this point of time, the gas outlet valve is in the closed state, and the gas g2 (the gas g1 is sometimes included) is filled in the inside of the container. Since the pressure difference exists inside and outside the airtight container even after the gas g1 is separated and discharged, the same kind of gas as the gas g1 which is once separated and discharged does not enter the inside of the container unless the external environment of the airtight container changes. However, if the external environment changes (for example, the pressure and/or concentration becomes higher in the outside than in the inside), the gas can enter the inside. When the total pressure P1 is raised to the total pressure P2 which is higher than it by further decreasing the volumetric capacity of the inside of the airtight container which has the total pressure P1, the gas outlet valve opens this time and at least a part of the gas g2 existing in the inside of the container is pushed out and discharged to the outside of the container. On the occasion of discharge, the pressure difference exists inside and outside the gas separating membrane, and therefore, the gas g1 is sometimes separated and discharged outside the airtight container through the gas separating membrane. At this point of time, the gas G is separated into the gas g1 and the gas g2 by the gas separating membrane. The kind, shape, size, thickness and the like of the gas separating membrane, the set value of the opening pressure and the like of the gas outlet valve are properly set in accordance with, for example, the use purpose of the separating device, the kind, quantity, concentration and the like of the gas to be obtained by separation. Namely, when the gas G is, for example, atmospheric air, and the gas separating membrane has the characteristic which transmits an oxygen gas but does not transmit a nitrogen gas, and when the atmospheric air at the total pressure P reaches the total pressure P1 with decrease in the volumetric capacity of the inside of the airtight container (due to deformation of the container, for example), the oxygen gas g1 is separated and discharged to the outside of the container through the gas separating membrane. By this separation and discharge, the oxygen gas g1 and the nitrogen enriched gas g2 are separated. The gas g2 rich in nitrogen (nitrogen enriched gas) remaining in the airtight container is discharged (taken out) to the outside of the airtight container from the gas outlet valve when the total pressure reaches P2 by further decrease in the volumetric capacity. Namely, the gas g2 can be taken out from the airtight container without using a special device such as a gas suction device. Since the separating device of claim 1 does not use an air compressor, reduction in size and weight of the entire device is made possible, and if the action of an external force is realized manually, the device is usable in the places without a power supply.

### (Characteristics of the invention described in claim 2)

In the gas separating device according to the invention described in claim 2 (hereinafter, properly called "the separating device of claim 2"), the basic construction of the separating device of claim 1 is included, and an external force is designed to act on the above described partition wall through a jack structure. "The jack structure" means the structure which can increase motive power such as, for example, human power, by using, for example, a screw, a gear, water pressure, hydraulic pressure and the like.

According to the separating device of claim 2, in addition to the operational effect of the separating device of claim 1, the motive power is increased by the function of the jack structure, and by the increase, the operation of moving and/or deforming the partition wall can be performed easily (or with a small force). Namely, if the external force of the same magnitude is caused to act, the motive power can be made smaller by using the jack structure, and if the motive power of the same magnitude is used, a larger external force can be caused to act.

### (Characteristic of the invention described in claim 3)

In the gas separating device according to the invention described in claim 3 (hereinafter, properly called "the separating device of claim 3"), the basic construction of the separating device of claim 1 or 2 is included, total pressure P2 at the time of allowing the inside of the above described airtight container and the outside to communicate with each other is designed to be able to be set to be variable.

According to the separating device of claim 3, in addition to the operational effect of the separating device of claim 1 or 2, the pressure (set pressure) loaded on the gas separating membrane is caused to differ by changing the setting of the gas outlet valve. Namely, when the set pressure is made higher, the pressure loaded on the gas separating membrane is enhanced correspondingly, and therefore, the gas separation efficiency can be made high (the concentration of the gas remaining in the airtight container is enhanced). Namely, the pressure setting corresponding to, for example, use purpose, the kind and the quantity of the gas to be separated, and difference in use environment of the gas separating device is made possible.

### (Characteristic of the invention described in claim 4)

In the gas separating device according to the invention described in claim 4 (hereinafter, properly called "the separating device of claim 4"), the basic construction of the separating device of any one of claims 1 to 3 is included, and the above described gas separating membrane is reinforced by a gas permeable reinforcing membrane.

According to the separating device of claim 4, in addition to the operational effect of the separating device of any one of claims 1 to 3, the gas separating membrane is reinforced by the gas permeable reinforcing membrane. Namely, the amount of a gas transmitted through the gas separating membrane (gas transmission amount) is inversely proportional to the thickness of the gas separating membrane in general, and therefore, as one of the methods for increasing the gas transmission amount, there is the method for making the gas separating membrane thin. Depending on the strength of the material itself which composes the gas separating membrane, the strength of the gas separating membrane reduces as it becomes thinner and thinner. Thus, even when the gas separating membrane which is formed to be thin is incapable of constituting the partition wall by itself from the viewpoint of strength, it can constitute the partition wall if it is reinforced by the gas permeable reinforcing membrane.

### (Characteristic of the invention described in claim 5)

In the gas separating device according to the invention described in claim 5 (hereinafter, properly called "the separating device of claim 5"), the basic construction of the separating device of any one of claims 1 to 4 is included, and the above described partition wall which is moved and/or deformed is constituted to be returnable from a moved position and/or a deformed state by removing the action of the external force. The returning method includes self-retum based on the returning force which the partition wall itself has, power-operated return based on an external force acting in the returning direction, and the mixture of both.

According to the separating device of claim 5, in addition to the operational effect of the separating device of any one of claims 1 to 4, the gas separating operation which is temporarily finished can be performed again by making the partition wall, which is moved and/or deformed, returnable. Namely, the airtight container in which the partition wall returns can separate a gas again if the gas is charged therein. Return includes complete return which is the complete return to the state before movement and/or deformation, and partial return which is return to the reusable state even though it is not the return to the state before movement and/or deformation.

### (Characteristic of the invention described in claim 6)

In the gas separating device according to the invention described in claim 6 (hereinafter, properly called "the separating device of claim 6"), the basic construction of the separating device of claim 5 is included, and the above described partition wall is provided with a check valve that opens when the above described partition wall, which is moved and/or deformed, returns, and introduces a gas existing in the outside of the airtight container into the inside of the airtight container. The gas in the outside of the airtight container means, for example, atmospheric air if the airtight container is in the atmospheric air, and if the airtight container is in a specific atmosphere, it means a gas and/or vapor which composes the atmosphere. Further, the gas which is supplied from a gas supply source connected to the check valve from the outside of the airtight container is also applicable to the above described gas in the outside of the airtight container. It can be used in such a way that the inside of the airtight container is brought into a nitrogen atmosphere or a nitrogen enriched atmosphere by separating and discharging oxygen from the inside of the airtight container (including air) containing premature fruit to prevent deterioration of the fruit, and maturity of the fruit is hastened by filling an ethylene gas via the check valve before shipment or before eating.

According to the separating device of claim 6, in addition to the operational effect of the separating device of claim 5, when the partition wall returns, the check valve opens to introduce the gas in the outside of the container into the inside of the airtight container by power operation and/or automatically. Power-operated introduction means introduction of the gas intentionally, and automatic introduction means introduction of the gas with the return of the partition wall without requiring other power. In the case of adopting automatic introduction, the operation of charging a gas in the outside of the container into the inside of the airtight container can be omitted. Since the operation of charging an external gas is not required, it is convenient especially when the separating device is repeatedly used.

### (Characteristic of the invention described in claim 7)

In the gas separating device according to the invention described in claim 7 (hereinafter, properly called "the separating device of claim 7"), the basic construction of the separating device of claim 5 or 6 is included, and a returning member for automatically returning the above described partition wall is provided. As the returning member, for example, a coil spring, a plate spring, an elastomer material and the like are applicable. When the partition wall itself is composed of an elastically deformable member, the member itself also includes the function of the returning member.

According to the separating device of claim 7, in addition to the operational effect of the separating device of claim 5 or 6, the partition wall which temporarily moves and/or deforms automatically returns to the original position and/or state by the function of the returning member. When the partition wall itself has the automatic returning ability to some extent, the returning action by the returning member acts adjunctively. Since the partition wall automatically returns, it is very convenient when the separating device is repeatedly, especially continuously used.

### (Characteristic of the invention described in claim 8)

In the gas separating device according to the invention described in claim 8 (hereinafter, properly called "the separating device of claim 8"), the basic construction of the separating device of any one of claims 5 to 7 is included, and the above described partition wall is constructed by including a bottomed cylindrical fixed partition wall having a hollow part, and a movable partition wall reciprocatingly slidable while keeping an airtight state in a lengthwise direction of the hollow part with respect to an inner peripheral surface of the fixed partition wall in the hollow part of the fixed partition wall. If the fixed partition wall is compared to a cylinder, the movable partition wall corresponds to a piston which reciprocates inside the cylinder.

According to the separating device of claim 8, in the separating device of any one of claims 5 to 7, namely, in the separating device in which the partition wall is returnable, the movable partition wall reciprocatingly slides with respect to the fixed partition wall, and thereby, repetition of decrease and return of the internal volumetric capacity of the airtight container is made possible. Reciprocating slide of the movable partition wall does not interfere with the airtight state of the airtight container. Accordingly, decrease and return of the internal volumetric capacity of the airtight container causes pressure increase and pressure reduction of the inside of the airtight container.

### (Characteristic of the invention described in claim 9)

In the gas separating device according to the invention described in claim 9 (hereinafter, properly called "the separating device of claim 9"), the basic construction of the separating device of any one of claims 5 to 7 is included, and at least a part of the above described partition wall is constructed by an elastic member which deforms to be returnable.

According to the separating device of claim 9, in addition to the operational effect of the separating device of any one of claims 5 to 7, a part of the partition wall elastically returns after being deformed. If the partition wall is returnable to the state before deformation with only the elastic returning force of the partition wall, the returning member does not always have to be provided, but, for example, when it is incapable of returning with only the elastic returning force, or when the returning time is required to be hastened though it is returnable, the returning member can be provided.

### (Characteristic of the invention described in claim 10)

In the gas separating device according to the invention described in claim 10 (hereinafter, properly called "the separating device of claim 10"), the basic construction of the separating device of claim 5 or 6 is included, and whole of the above described partition wall is constructed by an elastic reinforcing membrane which has gas permeability and returnably deforms, and a gas separating membrane which is stuck to an inner wall of the elastic reinforcing membrane.

According to the separating device of claim 10, in addition to the operational effect of the separating device of claim 5 or 6, the entire partition wall is constructed by the gas separating membrane. Namely, the entire partition wall is constructed by the gas separating membrane, and thereby, the surface area of the gas separating membrane becomes as large as possible. As a result that the surface area is large, the gas separation efficiency can be made high correspondingly to the increase in the surface area. The gas separating membrane is generally made thin to enhance the separation efficiency, and the gas separating membrane itself does not include a sufficient elastic force for elastically returning by itself. Therefore, if the elastic force is assisted by the elastic reinforcing membrane, the gas separating membrane which is thin, and large in surface area can be adopted. The gas separating membrane which is thin and large in surface area realizes gas separation with high efficiency.

### (Characteristic of the invention described in claim 11)

In the gas separating device according to the invention described in claim 11 (hereinafter, properly called "the separating device of claim 11 "), the basic construction of the separating device of any one of claims 5 to 7 is included, and the above described partition wall is constructed by including a cylindrical bellows partition wall which is extendable and contractible, and a pair of opposed partition walls which airtightly close an upper end and a lower end of the bellows partition wall.

According to the separating device of claim 11, in addition to the operational effect of the separating device of any one of claims 5 to 7, decrease and return of the internal volumetric capacity of the airtight container are realized by contraction and extension of the bellows partition wall. If the bellows partition wall is made of a synthetic resin, it can be easily produced.

### (Characteristic of the invention described in claim 12)

In the gas separating device according to the invention described in claim 12 (hereinafter, properly called "the separating device of claim 12"), the basic construction of the separating device of claim 11 is included, and the above described bellows partition wall is constructed by including an elastic reinforcing membrane which has gas permeability and returnably deforms, and a gas separating membrane which is stuck to an inner wall of the elastic reinforcing membrane.

According to the separating device of claim 12, in addition to the operational effect of the separating device of claim 11, separation and discharge of the gas can be performed from the entire bellows partition wall. The bellows structure is the reciprocatingly folded structure, and therefore, its surface area is large, considering that it does not occupy a large space. Accordingly, if the bellows partition wall is constructed by the gas separating membrane (elastic reinforcing membrane), the gas separating membrane can be made thin, and large in surface area. The gas separating membrane which is thin and large in surface area realizes highly efficient gas separation.

### (Characteristic of the invention described claim 13)

In the gas separating device according to the invention described in claim 13 (hereinafter, properly called "the separating device of claim 13 "), the basic construction of the separating device of any one of claims 1 to 12 is included, and the above described gas G is atmospheric air, and the above described gas g1 is oxygen.

According to the separating device of claim 13, at least oxygen can be separated and discharged from atmospheric air by the operational effect of the separating device of any on of claims 1 to 12. Nitrogen included in the atmospheric air and/or other gases included in the atmospheric air can be separated and discharged together with oxygen in some cases, but nitrogen is lower in transmission speed as compared with oxygen, and therefore, nitrogen or a nitrogen enriched gas remains in the airtight container rather than atmospheric air. Nitrogen or a nitrogen enriched gas can be used for preventing deterioration of fruit by bringing the inside of the airtight container into a nitrogen atmosphere or a nitrogen enriched atmosphere by separating and discharging oxygen from the inside of the airtight container (containing air) in which premature fruit is stored, for example. It is already described that nitrogen or a nitrogen enriched gas is effective for preventing deterioration of fruit. The nitrogen or nitrogen enriched gas separated by the separating device of claim 13 can be used for effectively preventing deterioration of not only fruit, but also drink such as coffee and tea contained in an airtight container such as, for example, a beverage pot, and various kinds of liquids or fluids (for example, chemicals and cosmetics) contained in the airtight containers in the various shapes. In addition to this, the things which are likely to deteriorate if they are exposed to atmospheric air such as, for example, noble metal such as a ring, photograph and other printed matters can be expected to be effectively prevented from such deterioration if they are stored in the airtight container under a nitrogen or nitrogen atmosphere similarly to the above.

### (Characteristic of the invention described in claim 14)

The gas separating device according to the invention described in claim 14 (hereinafter, properly called "the separating device of claim 14") includes the basic construction of the separating device of any one of claims 1 to 12, the above described gas G is atmospheric air, and the above described gas g1 is vapor.

According to the separating device of claim 14, at least vapor can be separated and discharged from atmospheric air by the operational effect of the separating device of any one of claims 1 to 12. Nitrogen included in atmospheric air and /or other gases included in atmospheric air can be separated and discharged together with vapor in some cases.

### (Characteristic of the invention described claim 15)

The gas separating device according to the invention described in claim 15 (hereinafter, properly called "the separating device of claim 15") includes the basic construction of the separating device of any one of claims 1 to 14, and an auxiliary airtight container capable of receiving therein a gas g2 discharged from the above described airtight container is connected to the above described airtight container. The auxiliary airtight container does not always have to have the same size, shape and the like as those of the airtight container. The number of auxiliary airtight containers is at least one, but one or two or more of the auxiliary airtight container can be connected in series to the auxiliary airtight container. The structure of the auxiliary airtight container includes the substantially same structure as the airtight container in theory and function. Namely, the auxiliary airtight container is constructed by including the partition wall that partitions an inside and an outside of the auxiliary airtight container, a gas outlet valve provided at the partition wall, and a gas separating membrane which constitutes at least a part of the partition wall. Here, the partition wall is constructed to move and/or deform at least partially by action of an external force to be able to decrease an internal volumetric capacity of the airtight container, the gas separating membrane is constructed to be able to separate and discharge at least a part of a gas g'1 included in the gas G2 from the gas g2 sealed in the inside of the container to the outside of the airtight container when total pressure P' of the inside of the airtight container becomes total pressure P'1 (P' < P'1) or higher due to decrease in the volumetric capacity. The gas outlet valve is constructed to allow the inside of the airtight container and the outside to communicate with each other to be able to discharge a gas g'2 remaining in the inside of the airtight container to the outside when the total pressure of the inside of the airtight container becomes P'2 (P'2 > P'1) due to further decrease in the volumetric capacity of the inside of the airtight container.

According to the separating device of claim 15, in addition to the operational effect of the separating device of any one of claims 1 to 14, stepwise (undulate) separation of a gas is made possible. The stepwise separation of a gas means both stepwise separation of the same kind of gas from a certain gas, and stepwise separation of different kinds of gases from a certain gas. For example, separating oxygen from atmospheric air and further separating oxygen from the remaining gas corresponds to the stepwise separation of the same kind of gas, and separating oxygen from atmospheric air and separating carbon dioxide from the remaining gas corresponds to stepwise separation of different kinds of gases. By performing separation of the same kind of gas stepwise, the amount of a gas to be separated in the remaining gas can be reduced as much as possible. In the previous example, the atmospheric air (gas) with an extremely low oxygen concentration can be obtained. By performing separation of different kinds of gases stepwise, separation of a plurality of kinds of gases which cannot be performed by one separation can be performed. In the same previous example, atmospheric air (gas) with less oxygen and carbon dioxide can be obtained. In any case, the remaining gas can be taken out via the gas outlet valve of the auxiliary airtight container. Namely, the gas discharged from the gas outlet valve of the airtight container (for example, remaining nitrogen enriched gas after separation of oxygen) is charged into the auxiliary airtight container, an oxygen gas is further separated from the nitrogen enriched gas in the above described example by the same action as the gas separating action in the airtight container, and nitrogen enriched gas with higher concentration as compared with before the oxygen separation by the auxiliary airtight container can be taken out through the gas outlet valve. Namely, the concentration of the gas finally taken out by connecting the auxiliary airtight container in series to the airtight container (further, one or two or more of other auxiliary airtight containers as necessary) and performing separation and discharge of the gas can be made high by separating the same king of gas or different kinds of gases stepwise. When a gas with extremely high purity is required, such a demand can be sufficiently satisfied according to the separating device of claim 15.

### (Characteristic of the invention described in claim 16)

In the gas separating device according to the invention described in claim 16 (hereinafter, properly called "the separating device of claim 16") includes the basic construction of the separating device of claim 13, namely, on the precondition that the gas obtained from the gas outlet valve is a nitrogen enriched gas, and the above described gas outlet valve is constructed to be able to be mount with a nozzle thereon or to be integrated with a nozzle structure.

According to the separating device of claim 16, in addition to the operational effect of the separating device of claim 13, the gas separated and discharged from the airtight container can be supplied to the element supplied with the gas through the nozzle or the nozzle structure. The nozzle or the nozzle structure is capable of smoothly supplying a nitrogen enriched gas if it is constructed to have the structure corresponding to the structure for receiving supply of the supply destination requiring the nitrogen enriched gas. The nitrogen enriched gas has the action of preventing deterioration of solids, liquids and the like as a so-called inert gas, and therefore, its use purpose is extremely wide.

### (Characteristic of the invention described in claim 17)

In the gas separating device according to the invention described in claim 17 (hereinafter, properly called "the separating device of claim 17"), the basic construction of the separating device of claims 16 is included, and the above described nozzle or nozzle structure is constructed to be inserted into a ball for ball game or a valve of a rubber tire to be able to filling a gas therein.

According to the separating device of claim 17, a nitrogen enriched gas can be directly supplied to a ball for ball game and a bicycle tire. The balls for ball game include, for example, a tennis ball, a soccer ball, a basket ball, a volley ball and the like, and since they are made of rubber, by simply filling air therein, an oxygen gas is transmitted through the surfaces with lapse of time, and air pressure tends to be insufficient. If a nitrogen enriched gas, which is hardly transmitted through rubber, can be charged therein instead of air, pressure shortage with lapse of time can be covered remarkably. As a typical example of a rubber tire, tires of an bicycle and a motor cycle, an automobile tire, and the like are cited. It is as already described in the "Background of Art" that filling a rubber tire with a nitrogen enriched liquid decreases air release. For example, if an air pump (bicycle pump) used for a bicycle tire is allowed to have the same function as the separating device of claim 17, a nitrogen enriched gas can be easily filled into a bicycle tire for commercial use and for general household use without having a large-sized device such as a compressor, which is very convenient. The devices which fill a nitrogen enriched gas into the things other than balls for ball games or rubber tires correspond to the separating device of claim 17 if they are usable for balls for ball games or rubber tires from an objective standpoint.

### (Characteristic of the invention described in claim 18)

In the gas separating device according to the invention described in claim 18 (hereinafter, properly called "the separating device of claim 18"), the basic construction of the separating device of any one of claims 1 to 12 is included, and the gas separating device is constructed by including an airtight container for a separated gas capable of storing the gas g1 which is separated and discharged through the above described gas separating membrane from the inside of the above described airtight container, and a separated gas outlet valve provided in the airtight container for the separated gas.

According to the separating device of claim 18, in addition to the operational effect of the separating device of any one of claims 1 to 12, the gas g1 which is separated and discharged from the airtight container is stored and can be taken out from the separated gas outlet valve in accordance with necessity. Effective use of the gas g2 is made possible with the gas g2 inside the airtight container or in place of this.

### (Characteristic of the invention described in claim 19)

In the gas separating device according to the invention described in claim 19 (hereinafter, properly called "the separating device of claim 19"), the basic construction of the separating device of claim 18 is included, and the above described airtight container for the separated gas is provided side by side with the above described airtight container with the above described gas separating membrane therebetween, and an internal volumetric capacity of the airtight container for the separated gas is designed to able to decrease or increase in accordance with increase or decrease of the internal volumetric capacity of the above described airtight container by movement and/or deformation of the above described gas separating membrane.

According to the separating device of claim 19, in addition to the operational effect of the separating device of claim 18, by moving the gas separating membrane between the airtight container and the airtight container for the separated gas, the internal volumetric capacities of both of them relatively increase and decrease. Namely, if one of them increases, the other one decreases, and if the one decreases, the other one increases. Since the total pressure of one side with the gas separating membrane therebetween increases, and the total pressure of the other side decreases with this, the pressure difference of the both sides with the gas separating membrane therebetween becomes large as compared with the pressure difference in the case of increase or decrease of only any one of them. Accordingly, gas separation with high efficiency is made possible, and at the same time, both the remaining gas g2 after gas separation and the separated gas g1 can be used.

### (Characteristic of the invention described in claim 20)

In the gas separating device according to the invention described in claim 20 (hereinafter, properly called "the separating device of claim 20"), the basic construction of the separating device of claim 19 is included, and the gas separating device is constructed as follows as the concrete construction example. Namely, the above described airtight container and the above described airtight container for the separated gas are constructed to be able to be partitioned from each other by a movable partition wall in an inside of an airtight cylindrical body, and at least a part of the movable partition wall is constructed by a gas separating membrane, and the movable partition wall is constructed to be reciprocatingly slidable in a lengthwise direction of the airtight cylindrical body with respect to an inner peripheral surface of the airtight cylindrical body.

According to the separating device of claim 20, if the movable partition wall is considered to be removed, the inside of the airtight container and the inside of the airtight container for the separated gas coexist in the airtight cylindrical body. Next, if the movable partition wall is considered to be returned into the airtight cylindrical body, the inside of the airtight cylindrical body is partitioned from each other, and one space becomes the inside of the airtight container while the other space becomes the inside of the airtight container for the separated gas. Here, if the movable partition wall is slid in the lengthwise direction of the airtight cylindrical body, the volumetric capacity of the one space (for example, the inside of the airtight container) decreases, and the volumetric capacity of the other space (the inside of the airtight container for the separated gas in the above described example) increases correspondingly. When the movable partition wall is slid in the opposite direction, increase and decrease of the volumetric capacity is reversed from the above described case. The pressure difference occurs to both sides with the movable partition wall (gas separating membrane) therebetween by increase and decrease of the volumetric capacities, and gas separation is performed.

### (Characteristic of the invention described in claim 21)

In the gas separating device according to the invention described in claim 21 (hereinafter, properly called "the separating device of claim 21 "), the basic construction of the separating device of claim 20 is included, and the above described separated gas outlet valve is constructed to allow the inside of the airtight container for the separated gas and the outside to communicate with each other to be able to discharge the gas g1 remaining in the inside of the airtight container for the separated gas to the outside when the total pressure of the gas g1 separated and discharged into the above described airtight container for the separated gas exceeds predetermined pressure due to decrease in the volumetric capacity of the inside of the airtight container for the separated gas by return of the above described movable partition wall.

According to the separating device of claim 21, in addition to the operational effect of the separating device of claim 20, after the gas g1 is separated by movement of the movable partition wall to the airtight container side, further in accordance with necessity, the gas g2 remaining in the airtight container is discharged by additional movement of the movable partition wall, and thereafter, the separated gas outlet valve is opened by return of the movable partition wall, whereby the gas g1 stored in the airtight container for the separated gas can be taken out from the airtight container for the separated gas. Namely, by reciprocating movement (slide) of the movable partition wall, the gas g1 can be taken out from the inside of the airtight container for the separated gas without using a special device such as a gas suction device.

### (Characteristic of the invention described in claim 22)

In the gas separating device according to the invention described in claim 22 (hereinafter, properly called "the separating device of claim 22"), the basic construction of the separating device of claim 20 or 21 is included, and the above described separated gas outlet valve is constructed to be able to be mounted with a nozzle or to be integrated with a nozzle structure.

According to the separating device of claim 22, in addition to the operational effect of the separating device of claim 20 or 21, the gas separated and discharged from the airtight container can be supplied to an element to be supplied with the gas through the nozzle or the nozzle structure.

### (Characteristic of the invention described in claim 23)

In the gas separating device according to the invention described in claim 23 (hereinafter, properly called "the separating device of claim 23 "), the basic construction of the separating device of any one of claims 18 to 22 is included, and the above described gas G is atmospheric air, while the above described gas g1 is oxygen.

According to the separating device of claim 23, at least oxygen can be taken out via the separated gas outlet valve from atmospheric air by the operational effect of the separating device of any one of claims 18 to 22. Nitrogen included in atmospheric air and/or other gases included in the atmospheric air can be taken out together with oxygen in some cases, but nitrogen has lower transmission speed as compared with oxygen, and a gas richer in nitrogen than atmospheric air remains in the airtight container.

### (Characteristic of the invention described in claim 24)

In the gas separating device according to the invention described in claim 24 (hereinafter, properly called "the separating device of claim 24"), the basic construction of the separating device of claim 23 is included, and the above described nozzle or nozzle structure is constructed to be connectable to a gas supply tool for supplying the above described gas g1 to a human body. "The gas supply tool" means an instrument capable of supplying a gas in a state in which it is capable of being sucked into the mouth and/or nose of a human body. For example, the one in a mask shape which covers a mouth and nose, the one that can be held in a mouth, and the one in a tube shape capable of being inserted into a nose hole correspond to the gas supply tool.

According to the separating device of claim 24, oxygen (gas g1) or an oxygen enriched gas can be supplied to a human body through a gas supply tool via a nozzle or a nozzle structure by the operational effect of the separating device of claim 23. Oxygen or a oxygen enriched gas can be supplied to those who require oxygen inhalations due to disease and injury, those who immediately after vigorous workout, those who standing on places under oxygen-deficient atmosphere such as a summit of a high mountain, and the like.

### (Characteristic of the invention described in claim 25)

The gas separating device according to the invention described in claim 25 (hereinafter, properly called "the separating device of claim 25") is constructed by including an airtight container including an inside partitioned from an outside by a partition wall, a gas outlet valve provided at the partition wall, and a gas separating membrane that constitutes at least a part of the partition wall. With the above described construction as the precondition, the partition wall is constructed to move and/or deform at least partially by action of an external force to be able to decrease or increase an internal volumetric capacity of the airtight container. Here, a predetermined gas included in a gas existing in the inside of the airtight container is designed to be transmittable to the outside of the airtight container by pressure increase of the inside of the airtight container accompanying decrease in the volumetric capacity, or a predetermined gas included in a gas existing in the outside of the airtight container is designed to be transmittable into the inside of the airtight container through the gas separating membrane by pressure reduction of the inside of the airtight container accompanying increase in the volumetric capacity, and the gas in the inside of the airtight container is designed to be able to be taken out through the gas outlet valve.

According to the separating device of claim 25, the predetermined gas is separated and discharged to the outside of the airtight container through the gas separating membrane from the sealed gas by increase in total pressure accompanying decrease in the volumetric capacity of the inside of the airtight container, and in contrast with this, the predetermined gas is separated and introduced into the airtight container through the gas separating membrane from the gas outside the airtight container due to decrease in total pressure accompanying increase in the volumetric capacity. If the inside of the airtight container is made vacant (zero volumetric capacity) or is brought into the state near vacancy when the predetermined gas is separated and introduced, the predetermined gas or the gas enriched in the predetermined gas is stored in the airtight container and can be taken out via the gas outlet valve. Increase and decrease in the internal volumetric capacity of the airtight container are realized by movement or deformation of the partition wall, or both movement and deformation of the partition wall. According to the separating device of claim 25, it can be selected in accordance with its use purpose, use environment and the like whether the predetermined gas or the gas enriched in the predetermined gas is separated and discharged, or separated and introduced.

### (Characteristic of the invention described in claim 26)

The gas separating device according to the invention described in claim 26 (hereinafter, properly called "the separating device of claim 26") is constructed by including an airtight container including an inside partitioned from an outside by a partition wall, a gas separating membrane that constitutes at least a part of the partition wall, and a covering member capable of airtightly covering the gas separating membrane from the outside or the inside. Here, the partition wall is constructed to move and/or deform at least partially by action of an external force to be able to decrease an internal volumetric capacity of the airtight container, a predetermined gas included in a gas existing in the inside of the airtight container is designed to be transmittable to the outside of the airtight container by pressure increase of the inside of the airtight container accompanying decrease in volumetric capacity. Further, the covering member is constructed to be able to partition the inside of the airtight container and the outside in place of the gas separating membrane by covering the gas separating membrane from the inside of the airtight container or the outside.

According to the separating device of claim 26, by increase in total pressure accompanying decrease in the volumetric capacity of the inside of the airtight container, the predetermined gas is separated and discharged to the outside of the airtight container through the gas separating membrane from the sealed gas. Thereby, the inside of the airtight container is under the atmosphere from which the predetermined gas is excluded. On the assumption that the atmosphere before the predetermined gas is excluded is the same as the atmosphere of the outside of the airtight container, the atmosphere from which the predetermined gas is excluded is lower in concentration of the predetermined gas by the amount of exclusion of the predetermined gas as compared with the atmosphere before the predetermined gas is excluded (namely, the same as the atmosphere of the outside), when the atmosphere from which the predetermined gas is excluded is compared with the atmosphere of the outside of the airtight container. Namely, the state in which the inside of the airtight container is higher in concentration of a certain gas than the outside is formed. If this state is kept, there is the fear of the predetermined gas included in the outside is transmitted through the gas separating membrane and enters the inside of the airtight container by the concentration difference of the inside and the outside. When the inside and the outside of the airtight container are assumed to be under the atmosphere of atmospheric air, if oxygen is separated and discharged to the outside of the airtight container by the function of the gas separating membrane, the inside of the airtight container is under a nitrogen enriched atmosphere. Namely, the nitrogen enriched atmosphere is higher in nitrogen concentration than the atmosphere of atmospheric air. If this state is kept, nitrogen included in the atmospheric air is transmitted through the gas separating membrane and enters the inside of the airtight container. It is the role of the covering member that suppresses the entry. The covering member partitions the inside of the airtight container and the outside in place of the gas separating membrane by covering the gas separating membrane, and therefore, if the gas separating membrane is covered with the covering member after separation of the predetermined gas, transmission of the gas through the gas separating membrane after separation can be effectively suppressed. Accordingly, entry and transmission of the predetermined gas into the airtight container can be effectively suppressed, and discharge and transmission of the remaining gas in the airtight container can be effectively suppressed when the discharge and transmission of the remaining gas in the airtight container is in the state in which it can occur though it depends on the conditions of the atmosphere, total pressure and the like of the outside of the airtight container, and the discharge and transmission is not desired.

### (Characteristic of the invention described in claim 27)

The gas separating device according to the invention described in claim 27 (hereinafter, properly called "the separating device of claim 27") includes the basic construction of the separating device of claim 26, and the above described airtight container is constructed to be able to house a stored material, and the above described partition wall is constructed to be movable and/or deformable without being influenced by the stored material which is housed therein. Namely, the internal volumetric capacity of the airtight container is designed to be capable of decreasing without being influenced by the stored material.

According to the separating device of claim 27, in addition to the operational effect of the separating device of claim 26, the inside of the airtight container after separation and discharge of the predetermined gas is under the atmosphere of the remaining gas after the predetermined gas is separated and discharged, and therefore, the stored material can be housed in the remaining gas atmosphere. For example, if the above described remaining gas is a nitrogen enriched gas, the stored materials which are apt to be deteriorated by oxygen irrespective of the property such as a liquid and solid, such as for example, food and drink, noble metal, photograph, and printed matters are housed therein, and thereby, deterioration of these stored materials can be effectively prevented.

### (Characteristic of the invention described in claim 28)

The gas separating device according to the invention described in claim 28 (hereinafter, properly called "the separating device of claim 28") includes the basic construction of the separating device of claim 26 or 27, and is characterized in that the gas existing in the inside of the above described airtight container is atmospheric air, and the above described predetermined gas is oxygen.

According to the separating device of claim 28, at least oxygen can be separated and discharged from atmospheric air by the operational effect of the separating device of claim 26 or 27. Nitrogen included in atmospheric air and/or other gases included in the atmospheric air can be separated and discharged together with vapor in some cases.

### (Characteristic of the invention described in claim 29)

The gas separating device according to the invention described in claim 29 (hereinafter, properly called "the separating device of claim 29") includes the basic construction of the separating device of claim 28, and is characterized in that the stored material which is housed in the above described airtight container is food (food and drink).

According to the separating device of claim 29, food as the stored material can be housed under the nitrogen enriched atmosphere by the operational effect of the separating device of claim 28. Food includes, for example, a liquid such as coffee and tea, a solid such as a granulated spice, a fluid such as jelly, and the mixture of them.

### (Characteristic of the invention described in claim 30)

The gas separating device according to the invention described in claim 30 (hereinafter, properly called "the separating method of claim 30") is characterized by including the steps of preparing an airtight container in which at least a part of a partition wall partitioning an outside and an inside is constructed by a gas separating membrane, and a gas outlet valve is provided at the partition wall, increasing or reducing pressure of an inside of the airtight container by decreasing or increasing a volumetric capacity of a gas sealed in the airtight container by action of an external force, separating and discharging, or separating and absorbing a predetermined gas through a gas separating membrane by a pressure difference between the inside of the airtight container and the outside with the gas separating membrane therebetween, and taking out the gas existing in the airtight container through a gas outlet valve.

According to the separating method of claim 30, the predetermined gas is separated and discharged to the outside of the airtight container through the gas separating membrane from the sealed gas by increase in total pressure accompanying decrease in the volumetric capacity of the inside of the airtight container, and in contrast with this, the predetermined gas is separated and introduced into the airtight container through the gas separating membrane from the gas in the outside of the airtight container by reduction in total pressure accompanying increase in the volumetric capacity. When the predetermined gas is separated and introduced, if the inside of the airtight container is made substantially vacant (substantially zero volumetric capacity) or is brought into the state near substantially vacancy in advance, the predetermined gas or the gas enriched in the predetermined gas is stored in the airtight container, and this can be taken out via the gas outlet valve. According to the separating method of claim 30, it can be selected in accordance with it use purpose, use environment and the like whether the predetermined gas or the gas enriched in the predetermined gas is separated and discharged, or separated and introduced. According to the separating method of claim 26, since an air compressor is not used, the device for carrying out the separating method can be made compact and light, and is sometimes usable without a power supply.

### (Characteristic of the invention described in claim 31)

In the gas separating method according to the invention described in claim 31 (hereinafter, properly called "the separating method of claim 31 "), the gas outlet valve used for the separating method of claim 30 is constructed to be openable when total pressure of the inside of the airtight container reaches predetermined pressure by decreasing a volumetric capacity of the gas after separation and discharge, or separation and absorption of the predetermined gas sealed in the inside of the above described airtight container by action of an additional external force.

According to the gas separating method of claim 31, the gas after separation and discharge, or separation and absorption of the predetermined gas remaining in the airtight container is discharged (taken out) to the outside of the airtight container from the gas outlet valve when the total pressure reaches the predetermined pressure by further decrease in the volumetric capacity. Namely, without using a special device such as a gas suction device, the gas g2 can be taken out from the airtight container.

### (Characteristic of the invention described in claim 32)

In the gas separating method according to the invention described in claim 32 (hereinafter, properly called "the separating method of claim 32"), the basic construction of the separating method of claim 30 or 31 is included, and is characterized in that the gas sealed in the above described airtight container is atmospheric air, and the above described predetermined gas is oxygen.

According to the separating method of claim 32, by the separating method of claim 30 or 31, oxygen can be separated and discharged, or separated and introduced from atmospheric air. As a result, a nitrogen enriched gas is stored in the airtight container after separation and discharge of oxygen, and oxygen or an oxygen enriched gas is stored in the airtight container which is substantially vacant. The respective gases can used in accordance with the respective use purposes.

### (Characteristic of the invention described in claim 33)

The gas separating device according to the invention described in claim 33 (hereinafter, properly called "the separating device of claim 33") includes an airtight container including an airtight chamber partitioned from an outside by a partition wall, a movable partition wall that is inside the airtight chamber and airtightly separates the airtight chamber into one airtight chamber and the other airtight chamber, a drive structure that reciprocatingly moves the movable partition wall in the airtight chamber, one gas separating membrane that constitutes at least a part of the partition wall which partitions the one airtight chamber and the outside, the other gas separating membrane that constitutes at least a part of the partition wall which partitions the other airtight chamber and the outside, one check valve that is provided at the partition wall to take out a gas existing in the one airtight chamber to the outside, and the other check valve that is provided at the partition wall to take out a gas existing inside the other airtight chamber to the outside, and the movable partition wall is constructed to be able to change a volumetric capacity ratio of the one airtight chamber and the other airtight chamber in the airtight chamber while keeping airtightness by movement by the drive structure. The partition wall can be constructed by, for example, a metal and a synthetic resin, and a packing and the like can be used for keeping airtightness as necessary. Any packing and the like are applicable to the partition wall in this specification as long as they partition the outside of the container and the inside of the container. The drive structure can properly adopt means using, for example, electric energy, positional energy and the like other than man power as its drive source. The one gas separating membrane in the above described construction is constructed to be able to separate and introduce a gas g1 included in a gas G into the inside of the one airtight chamber from the gas G into the one airtight chamber when total pressure P of the inside of the one airtight chamber becomes total pressure P1 (P > P1) or lower by increase in a volumetric capacity by movement of the movable partition wall. Similarly, the other gas separating membrane is constructed to be able to separate and introduce the gas g1 included in the gas G into the inside of the other airtight chamber from the gas G into the other airtight chamber when total pressure P' of the inside of the other airtight chamber becomes total pressure P'1 (P' > P'1) or lower by increase in a volumetric capacity by movement of the movable partition wall, the one check valve is constructed to allow the inside of the one airtight chamber and the outside to communicate with each other to be able to discharge the gas g1 existing in the inside of the one airtight chamber to the outside when the total pressure P1 of the inside of the one airtight chamber becomes P2 (P2 > P1) by decrease in the volumetric capacity of the inside of the one airtight chamber by the movement of the movable partition wall, and the other check valve is constructed to allow the inside of the other airtight chamber and the outside to communicate with each other to be able to discharge the gas g1 existing in the inside of the other airtight chamber when the total pressure P'1 of the inside of the other airtight chamber becomes P'2 (P'2 > P'1) by decrease in volumetric capacity of the inside of the other airtight chamber by the movement of the movable partition wall. Here, the above described one and the other "gas separating membranes" are generic names of the membranes having the gas separating function. The form of the gas separating membrane is not especially limited, and for example, a flat plate shape, a hollow fiber shape, a spiral shape and the like are cited, and each gas separating membrane constituting them may have ups and downs on the surface due to bending, curving, change in thickness and the like. As the material composing the gas separating membrane, an organic material such as copolymer, an inorganic material such as silica, alumina, and carbon, a hybrid material made by combining an organic material and inorganic material and the like are cited, and these materials containing an additive such as absorbent and the like are also included. The properties of the gas separating membrane (for example, permeability coefficient, film thickness, film area) are properly set in accordance with use purpose of the separating device, and the kind, quantity, concentration and the like of the gas to be obtained by separation. The gas separating membranes in the same form and material do not necessarily have to be used, those having a plurality of forms, materials and the like shown as examples above can be combined and used, and "the total pressure" means the sum total of the partial pressures of the respective gases, which are as already described.

According to the separating device of claim 33, change in the volumetric capacity ratio is repeatedly performed between the one airtight chamber and the other airtight chamber by reciprocating movement of the partition wall. The volumetric capacity of the other airtight chamber increases by the amount of decrease of the volumetric capacity of the one airtight chamber, and in contrast with this, the volumetric capacity of the other airtight chamber decreases by the amount of increase in the volumetric capacity of the one airtight chamber. When the volumetric capacity of the one airtight chamber increases by the movement of the partition wall in the volumetric capacity increasing direction, the total pressure P of the one airtight chamber reduces to P1. The pressure difference between the inside and the outside of the airtight container due to this pressure reduction introduces the gas g1 into the one airtight chamber. Namely, the gas g1 is the gas which is transmitted and separated by the one gas separating membrane from the gas G existing outside the airtight container. By the gas introduction, the inside of the one airtight chamber is filled with the gas g1 On the other hand, by the movement of the partition wall in the volumetric capacity decreasing direction which is the opposite from the above, the volumetric capacity of the inside of the one airtight chamber decreases and the total pressure of the gas g1 filled therein increases. As a result of increase in volumetric capacity, when the total pressure P1 increases to P2, the one check valve opens and releases the gas g1 filled therein to the outside. From the above, takeout of the gas g1 from the one airtight chamber is completed. Increase and decrease of the volumetric capacity of the other airtight chamber are performed in the opposite timing from the increase and decrease in the volumetric capacity of the one airtight chamber. By increase in the volumetric capacity, the total pressure P' of the inside of the other airtight chamber reduces to P'1 to introduce the gas g1 into the inside, and by decrease in the volumetric capacity, the total pressure P'1 increases to P'2 to release the gas g1 filled therein to the outside of the airtight container. Introduction of the gas g1 is performed through the other gas separating membrane, and release of the gas g1 is performed via the other check valve. In this manner, according to the separating device of claim 33, the gas g1 can be taken out in each of the forward movement and returning movement of the partition wall, and therefore, as compared with the case where the gas g1 is taken out by movement in only one direction, the gas can be taken out extremely efficiently. In other words, the gas can be taken out by the movement in both the forward direction and the returning direction, and therefore, as compared with the case where the gas can be taken out by the movement in only either one direction, the gas can be taken out by substantially doubled efficiency.

### (Characteristic of the invention described in claim 34)

In the gas separating device according to the invention described in claim 34 (hereinafter, properly called "the separating device of claim 34"), the basic construction of the separating device of claim 33 is included, and the above described drive structure is constructed by including a jack structure disposed at the outside of the above described airtight container. The "jack structure" means the structure capable of increasing motive power such as, for example, human power by utilizing, for example, a screw, a gear, water pressure, hydraulic pressure and the like.

According to the separating device of claim 34, in addition to the operational effect of the separating device of claim 33, the motive power is increased by the function of the jack structure, and the operation of moving and/or deforming the partition wall can be performed easily (or with a small force) by the increase. Namely, if the external force of the same magnitude is caused to act, the motive power can be made smaller by using the jack structure, and if the motive power of the same magnitude is used, a larger external force can be caused to act.

### (Characteristic of the invention described in claim 35)

In the gas separating device according to the invention described in claim 35 (hereinafter, properly called "the separating device of claim 35"), the basic construction of the separating device of claim 33 or 34 is included, and the above described one and other gas separating membranes are respectively reinforced by gas permeable reinforcing membranes.

According to the separating device of claim 35, in addition to the operational effect of the separating device of claim 33 or 34, the gas separating membranes are reinforced by the gas permeable reinforcing membranes. Namely, since the amount of transmission through the gas separating membrane (gas transmission amount) is inversely proportional to the thickness of the gas separating membrane in general, there is a method of making the gas separating membrane thin as one method for increasing the gas transmission amount. Depending on the strength of the material itself which composing the gas separating membrane, strength of the gas separating membrane reduces more as it becomes thinner and thinner. Thus, though the gas separating membrane which is formed to be thin is incapable of constituting the partition wall by itself from the viewpoint of strength, if it is reinforced by the gas permeable reinforcing membrane, it can constitute the partition wall.

### (Characteristic of the invention described in claim 36)

In the gas separating device according to the invention described in claim 36 (hereinafter, properly called "the separating device of claim 36"), the basic construction of the separating device of claims 33 to 35 is included, and the above described drive structure is constructed by including a motor or a solenoid which to be a drive source, and a power supply for driving the motor or the solenoid.

According to the separating device of claim 36, in addition to the operational effect of the separating device of any one of claims 33 to 35, takeout of the gas g1 can be performed by drive of the motor or the solenoid. The drive by the motor or the solenoid can decrease the burden of a user as compared with manual drive.

### (Characteristic of the invention described in claim 37)

In the gas separating device according to the invention described in claim 37 (hereinafter, properly called "the separating device of claim 37"), the basic construction of the separating device of claim 36 is included, and the above described power supply is constructed by including a battery charger, and a solar panel that is installed on an outer periphery of the above described partition wall and is electrically connected to the battery charger.

According to the separating device of claim 37, in addition to the operational effect of the separating device of claim 36, the battery charger is charged by the function of the solar panel, and therefore, energy can be saved by the charged amount. Though there is the difference due to amount of sunlight or the like, and the length or the like of time of use, supply of other energies is not required as long as the battery charger is sufficiently charged. For example, when the device is used for a long period of time in the areas without a power supply such as areas in the mountains, it is very convenient.

### (Characteristic of the invention described in claim 38)

In the gas separating device according to the invention described in claim 38 (hereinafter, properly called "the separating device of claim 38"), the basic construction of the separating device of any one of claims 33 to 37 is included, the above described gas G is atmospheric air, while the above described gas g1 is an oxygen enriched gas.

According to the separating device of claim 38, in addition to the operational effect of the separating device of any one of claims 33 to 37, an oxygen enriched gas can be easily obtained without having a large-scaled device. Namely, an oxygen enriched gas can be obtained when necessary without having an instrument such as a oxygen cylinder and a compressor. For example, when oxygen (oxygen enriched gas) is to be given to a sick person or a person after physical exercise, it can be used in place of an oxygen cylinder, and therefore it is very convenient.

### (Characteristic of the invention described in claim 39)

In the gas separating device according to the invention described in claim 39 (hereinafter, properly called "the separating device of claim 39"), the basic construction of the separating device of claim 38 is included, and the above described one and other check valves are connected to a gas supply tool for sequentially supplying the gas g1 taken out via the one check valve and the gas g1 taken out via the other check valve to a human body. The "gas supply tool" means the tool capable of supplying a gas to the mouth and/or nose of a human body in the state in which it can be sucked therein. For example, the one in the mask shape which covers a mouth and a nose, the one capable of being held in a mouth, and the one in the tube shape capable of being inserted into a nose hole correspond to the gas supply tool.

According to the separating device of claim 39, in addition to the operational effect of the gas separating device of claim 38, an oxygen enriched gas (gas g1) which is taken out via the one check valve, and an oxygen enriched gas (gas g1) which is taken out via the other check valve can be sequentially supplied to a human body via the gas supply tool. An oxygen enriched gas can be supplied to those who require oxygen inhalation due to disease and injury, those who immediately after vigorous workout, those who are in the places under oxygen-deficient atmosphere as in the summits of high mountains and the like. Since a gas can be taken out by the movement in both the forward direction and the returning direction as described in the explanation of the operational effect of the separating device of claim 33, the gas can be taken out by substantially doubled efficiency as compared with the case where the gas can be taken out from the movement in only either one direction, and therefore, efficient supply to a human body becomes possible.

According to the gas separating device according to the present invention, the gas separating device can be made compact and light, and can be used without a power supply at times. According to the gas separating method according to the present invention, the device used for carrying out the method can be made compact and light, and can be without a power supply at times. Accordingly, the gas separating device can be easily carried, and can be installed in a small space, and therefore, it can be easily incorporated into various kinds of apparatuses, equipment and the like which require the separated gas.

### BRIEF DESCRIPTION OF THE DRAWINGS

Fig. 1 is a plane view of a gas separating device according to this embodiment;
Fig. 2 is a sectional view taken along the line A-A of the gas separating device shown in Fig. 1;
Fig. 3 is a plane view of a gas separating device according to a first modification example of this embodiment;
Fig. 4 is a sectional view taken along the line B-B of the gas separating device shown in Fig. 3;
Fig. 5 is a sectional view taken along the line B-B of the gas separating device shown in Fig. 3;
Fig. 6 is a vertical sectional view of a gas separating device according to a second modification example of this embodiment;
Fig. 7 is a vertical sectional view of the gas separating device according to the second modification example of this embodiment;
Fig. 8 is a vertical sectional view of a gas separating device according to a third modification example of this embodiment;
Fig. 9 is a vertical sectional view of a gas separating device according to a fourth modification example of this embodiment;
Fig. 10 is a vertical sectional view of a gas separating device according to a fifth modification example of this embodiment;
Fig. 11 is a vertical sectional view of the gas separating device according to the fifth modification example of this embodiment;
Fig. 12 is a vertical sectional view of the gas separating device according to the fifth modification example of this embodiment;
Fig. 13 is a plane view of a gas separating device according to a sixth modification example of this embodiment;
Fig. 14 is a sectional view taken along the line C-C of the gas separating device according to the sixth modification example of this embodiment;
Fig. 15 is a sectional view taken along the line C-C of the gas separating device according to the sixth modification example of this embodiment;
Fig. 16 is a sectional view of a gas separating device according to a seventh modification example of this embodiment;
Fig. 17 is a perspective view of a gas separating device according to an eighth modification example of this embodiment;
Fig. 18 is a plane view of the gas separating device according to the eighth modification example of this embodiment;
Fig. 19 is a bottom view of the gas separating device according to the eighth modification example of this embodiment;
Fig. 20 is a vertical sectional view of the gas separating device according to the eighth modification example of this embodiment;
Fig. 21 is a perspective view of a gas separating device according to a ninth modification example of this embodiment;
Fig. 22 is a plane view of the gas separating device according to the ninth modification example of this embodiment;
Fig. 23 is a bottom view of the gas separating device according to the ninth modification example of this embodiment;
Fig. 24 is a vertical sectional view of the gas separating device according to the ninth modification example of this embodiment;
Fig. 25 is a perspective view of a gas separating device according to a tenth modification example of this embodiment;
Fig. 26 is a vertical sectional view of the gas separating device according to the tenth modification example of this embodiment;
Fig. 27 is a perspective view of a gas separating device according to an eleventh modification example of this embodiment;
Fig. 28 is a plane view of the gas separating device with a top plate omitted according to the eleventh modification example of this embodiment;

### DETAILED DESCRIPTION OF THE PREFERRED EMBODIMENTS

A best mode for carrying out the present invention (hereinafter, properly called "this embodiment") will now be described. This embodiment includes a first to an eleventh modification examples as will be described later. On explanation of this embodiment and the respective modification examples accompanying it, separation of oxygen from atmospheric air is the perquisite, but it goes without saying that the present invention is also applicable to the case where a gas included in a gas other than atmospheric air is separated from the gas other than atmospheric air.

### (Schematic structure of the gas separating device)

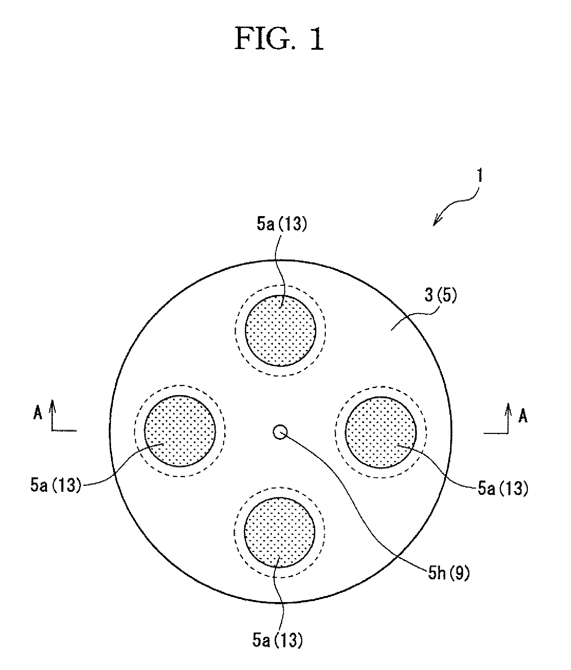

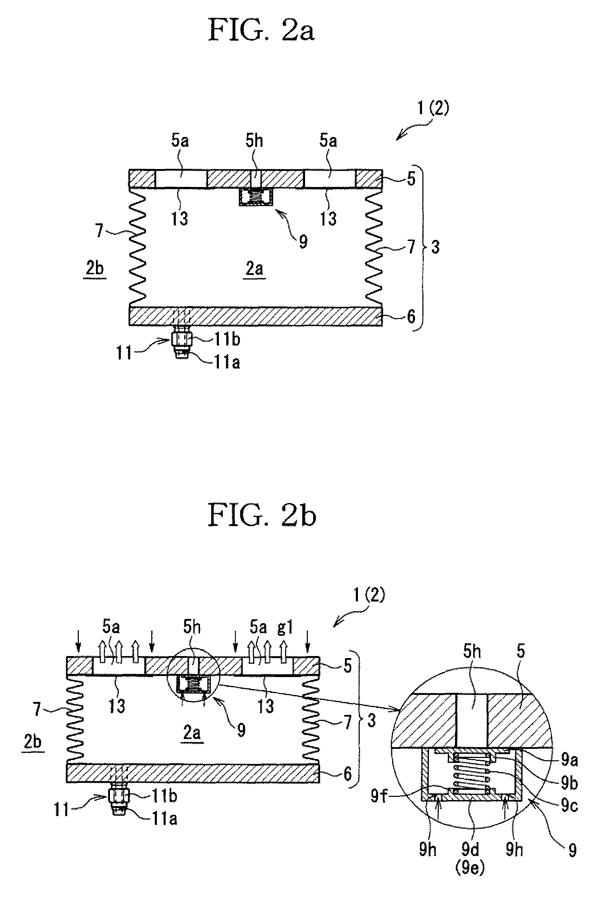

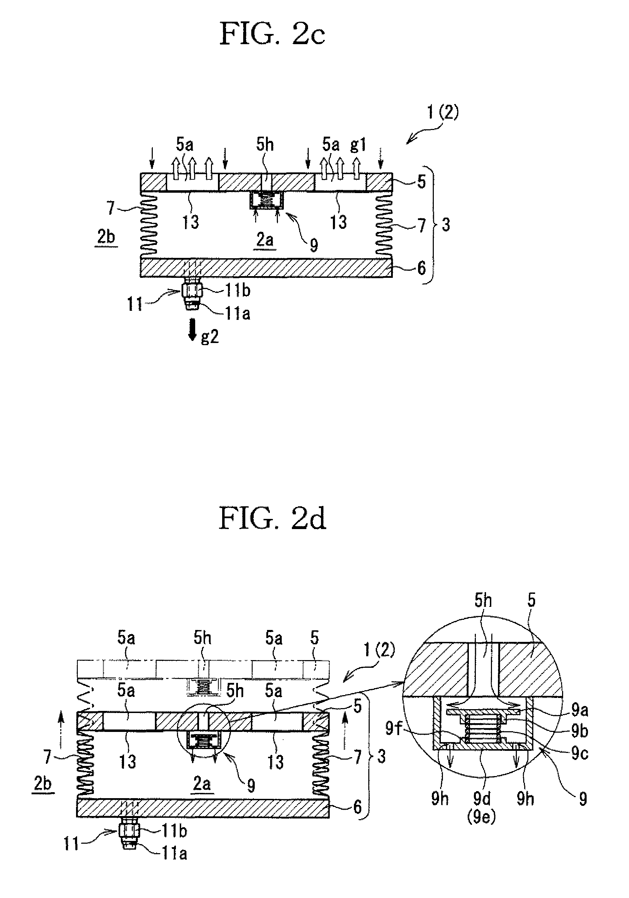

Reference is made to Figs. 1 and 2. Fig. 1 is a plane view of a gas separating device, and Fig. 2 is a sectional view taken along the line A-A of the gas separating device shown in Fig. 1. A gas separating device 1 is generally constructed by an airtight container 2 including a container inside 2a separated from a container outside 2b by a partition wall 3, a relief valve 11 which functions as a gas outlet valve, a check-valve 9 for introducing a gas into the inside from the outside of the airtight container 2, and a gas separating membrane 13 composing a part of the partition wall 3. The partition wall 3 is constructed by a pair of opposed partition walls 5 and 6 opposed to each other in the vertical direction in Fig. 2, and bellows partition walls 7 disposed between the opposed partition wall 5 and the opposed partition wall 6. The opposed partition walls 5 and 6 are plates circular in plane view, namely, disks in the same size each composed of a metal or a hard synthetic resin, for example.

The bellows partition wall 7 is formed into a cylindrical bellows shape which deforms to be returnable by folding a thin soft synthetic resin film or metal foil (or the thing formed by using both of them in combination) inward and outward in a staggered configuration , and is constructed to be contractible and extendable in an axial direction (lengthwise direction) by extension and contraction of its folded portions. One end of the bellows partition wall 7 is caused to adhere closely to the surface (opposed surface) of the opposed partition wall 5 at the side facing the opposed partition wall 6, and the other end of it is caused to adhere closely to the surface (opposed surface) of the opposed partition wall 6 at the side facing the opposed partition wall 5, respectively. By close adhesion of the bellows partition wall 7 to the opposed partition walls 5 and 6, the container inside 2a is in an airtight state at a time of normal pressure (not in use) and is partitioned from the container outside 2b, when the check-valve 9 and the relief valve 11 are closed. Extension and contraction of the bellows partition wall 7, namely, deformation of the airtight container 2 is mainly performed by an external force which works in the direction of extension or contraction, and in this embodiment, human power is assumed as the external force. Namely, by manually pressing either one or both of the opposed partition walls 5 and 6 in the directions to be close to the other wall from each other, the bellows partition wall 7 contracts in the lengthwise direction to be able to decrease the volumetric capacity of the container inside 2a, and on the other hand, by manually pulling it or them in the direction to be away from each other, the bellows partition wall 7 extends in the lengthwise direction to be able to return the volumetric capacity of the container inside 2a. The reason why human power is assumed for deformation of the airtight container 2 is that as long as human power is used as the external force, any special device is not required to obtain the external force not to speak of the air compressor. Namely, the main reasons of assuming human power is that the gas separating device 1 itself can be made of a simple structure, and can be constructed to be usable without a power supply. However, this does not intend to hinder use of electric energy, positional energy and the like for deformation of the airtight container 2, and if such energies are necessary in the relation of the use purpose of the gas separating device 1, the kind of a gas to be separated, quantity of the target gas and the like, such energies can be used.

A single or a plurality of (four in this embodiment) vent holes 5a, .. and one gas guiding hole 5h are respectively formed in the opposed partition wall 5 to penetrate through it in the thickness direction. Each of the vent holes 5a is formed into a circular shape, and as is obvious from Fig. 1, they are disposed equidistantly in the circumferential direction when they are seen in plane view . Each of the vent holes 5 a is formed into the circular shape for the reason of design corresponding to the circular shape of the opposed partition wall 5, and the shape and the number of them, the position for providing them and the like are not limited at all as long as they are in the range capable of functionally achieving the object of the present invention. The airtight closure of each of the vent holes 5a at the normal pressure is performed by the gas separating membrane 13 stuck to the opposed surface of the opposed partition wall 5. Namely, the gas separating membrane 13 composes a part of the partition wall 3 which partitions the container outside 2b and the container inside 2a of the airtight container 2. The gas guiding hole 5h is a through-hole formed in a substantially center of the opposed partition wall 5. The function of closing the gas guiding hole 5h airtightly is performed by the check-valve 9. The structure of the check-valve 9 will be described later. The relief valve 11 includes a valve main body 11a and an adjust ring 11b rotatably provided on an outer periphery of the valve main body 11a, and has the function of opening when the total pressure of the inside of the airtight container 2 exceeds predetermined pressure to allow the inside and the outside of the airtight container 2 to communicate with each other. The relief valve 11 is constructed to be capable of variably setting total pressure P2 when allowing the inside and the outside of the airtight container 2 to communicate with each other by rotating the adjust ring 11b. When the total pressure becomes lower than the predetermined pressure, the relief valve 11 is closed to shut off the communication of the inside and the outside of the airtight container 2. The relief valve 11 also includes the non-return function of inhibiting inflow of external gas to the inside of the airtight container 2. The shapes of the opposed partition walls 5 and 6 and the bellows partition wall 7 accompanying them are all circular in plane view, but they are properly changeable in accordance with the use purpose of the gas separating device 1, the installation environment of the gas separating device 1 and the like. The gas separating membranes 13, ·· provided at the opposed partition wall 5 may be provided at the opposed partition wall 6 instead of the opposed partition wall 5, and may be additionally provided at the opposed partition wall 6. It is more advantageous from the viewpoint of efficient gas separation to provide the same numbers of gas separating membranes 13 in the same size at both the opposed partition wall 5 and the opposed partition wall 6 since the area of the entire gas separating membranes 13 can be made wide.

### (Structure of the gas separating membrane)

The gas separating membrane 13 is a membrane (a film, a sheet) for making it possible to airtightly close the respective vent holes 5a of the opposed partition wall 5 at the time of the normal pressure as described above. The gas separating membrane 13 has the gas separating function of transmitting a predetermined gas included in a gas existing in the side at high pressure to the side at low pressure when it receives pressure. This respect is also already described. The material composing the gas separating membrane 13 is selected after the gas before separation (for example, atmospheric air, a specific mixture gas), the kind of a gas to be separated from the gas before separation (for example, oxygen, hydrogen, carbon dioxide, vapor), and further the amount of gas to be separated, in addition to which, use purpose, use environment and the like are generally taken into consideration. In order to enhance separation efficiency, if the gas separating membranes of the same kind are used, it is necessary to make the area of the gas separating membrane as large as possible, and to make the thickness of it as small as possible. However, as a result of making it wide and thin, the strength of the gas separating membrane is generally difficult to keep. Therefore, it is desired to reinforce the gas separating membrane by a reinforcing member which does not hinder ventilation. The gas separating membrane 13 in this embodiment is composed of silicon rubber (dimethyl polysiloxane vulcanized elastic solid) for the purpose of separating oxygen (oxygen enriched gas) from atmospheric air to take out nitrogen (nitrogen enriched gas). The main reasons of adoption of silicon rubber are that silicon rubber is relatively available and low in cost, silicon rubber has chemical resistance, temperature resistance and steam resistance, safety for human body and the like of silicon rubber have been already proved, and silicon rubber is safely usable even for food. For the purpose of separating oxygen from atmospheric air, instead of silicon rubber, or with silicon rubber, poly (1-trimethylsilyl-1-propyne), amorphous Teflon (trademark ; made by E. I. du Pont de Nemours and Company) and the like are sufficiently usable. Further, these materials shown as examples can be also preferably used for the purpose of separating hydrogen and/or carbon dioxide from atmospheric air. The gas separating membrane 13 is formed to be of a so-called flat type, but may be formed to be of a hollow fiber type, a spiral type and the like as long as the form of the airtight container permits them.

### (Structure of the check valve)

As shown in Figs. 2, the check valve 9 is generally constructed by a valve body 9a in the shape capable of airtightly closing the air guiding hole 5h substantially in the center of the opposed partition wall 5 via a contact surface (circular shape in this embodiment though not shown), an annular support portion 9b slightly protruded from a surface (holding surface) of the valve body 9a at the opposite side from the contact surface, a pressing spring 9c with one end thereof housed in the annular support portion 9b, a bottomed cylindrical body 9d for housing the valve body 9a and the pressing spring 9c to mount them to the opposed partition wall 5, and an annular support portion 9f which is slightly protruded from an opposed surface to the annular support portion 9b, of a bottom portion 9e of the bottomed cylindrical body 9d. The annular support portion 9f is constructed to be capable of housing the other end of the pressing spring 9c, supports the pressing spring 9c with the annular support portion 9b, and is constructed so that the pressing spring 9c can cause the valve body 9a to exert a sufficient pressing force to the opposed partition wall 5 (see the enlarged view in Fig. 2(b)). A plurality of through-holes 9h, .. which penetrate through the bottom portion 9e in the thickness direction are provided in the bottom portion 9e. The respective through-holes 9h are for allowing the inside of the bottomed cylindrical body 9d and the container inside 2a of the airtight container 2 to communicate with each other, in its turn, allowing the container outside 2b and the container inside 2a to communicate with each other.

In the check valve 9, the pressing spring 9c contracts when the total pressure of the container inside 2a of the airtight container 2 becomes negative pressure with respect to the total pressure of the container outside 2b, and the total pressure (full pressure) of the container outside 2b surpasses the pressing force of the pressing spring 9c, and with this, the valve body 9a retreats from the opposed partition wall 5. Retreat of the valve body 9a opens the gas guiding hole 5h to allow the gas in the container outside 2b to flow into the container inside 2a via the through-holes 9h, .. of the bottomed cylindrical body 9d from the opened gas guiding hole 5h. Inflow of an external gas is continued while the total pressure of the container outside 2b surpasses the total pressure of the container inside 2a, and it is shut off when the inner and the outer total pressures become equal to each other, or when the total pressure (full pressure) of the container outside 2b is surpassed by the pressing force of the pressing spring 9c. Shutoff of the external gas is performed by the pressing spring 9c extending to press the valve body 9a against the opposed partition wall 5 to close the gas guiding hole 5h. By closure of the gas guiding hole 5h, the airtight container 2 returns to the original state.

### (Gas separating method by using the airtight container)

Based on Fig. 2, a gas separating method carried out by using the gas separating device 1 will be described. Fig. 2 (a) shows the gas separating device 1 which is prepared for carrying out the gas separating method (first step). The opposed partition walls 5 and 6 which constitute the airtight container 2 of the gas separating device 1 are moved in the directions to be away from each other by holding the opposed partition wall 5 with one hand and holding the opposed partition wall 6 with the other hand, respectively. By this movement, the bellows partition walls 7 themselves extend to increase the volumetric capacity of the container inside 2a of the airtight container 2. When the bellows partition walls 7 themselves are constructed to be automatically extendable by their own elastic forces or the like, the volumetric capacity increases by their elastic forces, or by being assisted by the elastic forces. By increase in volumetric capacity, the internal total pressure P becomes negative pressure (atmospheric pressure is higher) with respect to the total pressure of the container outside 2b (namely, atmospheric pressure). By the pressure difference of the inside and the outside, the check valve 9 is opened, and an external gas, namely, atmospheric air is introduced into the container inside 2a of the airtight container 2. When the total pressure P of the container inside 2a and the total pressure of the container outside 2b are in balance by introduction of atmospheric air, the check valve 9 is closed to shut off the introduction of atmospheric air. At this point of time, the relief valve 11 is also closed with the check valve 9, and therefore, the atmospheric air in the container inside 2a of the airtight container 2 is in the sealed state. When movement of the opposed partition walls 5 and 6 in the direction to be away from each other is already performed, and atmospheric air is already introduced into the container inside 2a, the above described moving operation may be omitted.

Next, the total pressure P of the container inside 2a of the prepared airtight container 2 is increased to form the state at the total pressure P1 (second step). More specifically, as shown in Fig. 2 (b), the opposed partition wall 5 is pressed to be moved in the direction to be close to the opposed partition wall 6 and to also deform the bellows partition wall 7 by contraction, thereby decreasing the volumetric capacity of the container inside 2a. Since the container inside 2a is in the airtight state, the total pressure P of the sealed atmospheric air is increased to be the total pressure P1. The total pressure P1 is not the pressure sufficient for opening the relief valve 11. When the total pressure becomes the total pressure P1, oxygen g1 included in the atmospheric air in the container inside 2a transmits through the gas separating membrane 13 to be separated and discharged to the container outside 2b. Transmission of the oxygen g1 does not suddenly occur when the total pressure of the container inside 2a reaches P1, but it starts when the pressure difference occurs between the inside and the outside of the airtight container 2 irrespective of its amount. Namely, the total pressure P1 is higher pressure than the total pressure P at the time of normal pressure, and it means the pressure below pressure P2 which opens the relieve valve 11 ( P < P1 < P2). As a result that the oxygen g1 is separated and discharged to the container outside 2b, a nitrogen enriched gas g2 remains in the container inside 2a of the airtight container 2. Since nitrogen generally occupies substantially 80% of the volume of atmospheric air, the nitrogen enriched gas g2 has higher occupancy of nitrogen. Decrease of the volumetric capacity of the container inside 2a may be performed by the above described pressing of the opposed partition wall 6 with pressing of the opposed partition wall 5, and by pressing the opposed partition wall 6 instead of pressing the opposed partition wall 5. In this respect, the same thing applies to the pressing for opening the relief valve 11 which will be described later.

Next, the nitrogen enriched gas g2 remaining in the container inside 2a of the airtight container 2 is taken out of the relief valve 11 (third step). More specifically, as shown in Fig. 2 (c), the total pressure P1 is further increased by decreasing the volumetric capacity of the container inside 2a by further pressing the opposed partition wall 5 to form the state at the total pressure P2. The total pressure P2 is the pressure capable of opening the relief valve 11. When the nitrogen enriched gas g2 in the container inside 2a reaches the total pressure P2 by pressure increase, the relief valve 11 is opened to allow the container inside 2a and the container outside 2b to communicate with each other. Further pressing in the communicating state presses the nitrogen enriched gas g2 out to the container outside 2b. In this case, if a sealed container (not shown in the drawing) or the like to be the supply destination is connected to the relief valve 11, the nitrogen enriched gas g2 can be taken out into the above described sealed container or the like. While the opposed partition wall 5 continues to be pressed, namely, while the total pressure of the container inside 2a is not lower than P2, the relief valve 11 remains to open, and when it becomes lower than P2, it is closed to shut off the communication between the container inside 2a and the container outside 2b. The relief valve 11 which is closed as a result that the total pressure becomes lower than P2 by temporarily stopping pressing the opposed partition wall 5, is reopened to make it possible to take out the nitrogen enriched gas g2 again if pressing is restarted and the total pressure is caused to reach P2.

Takeout of the nitrogen enriched gas g2 is completed by the above described three steps, and the airtight container 2 which completed takeout is preferably returned to the original state in order to be reusable. Namely, the opposed partition walls 5 and 6 at the time of completion of takeout of the nitrogen enriched gas g2 are in the state in which they are moved close to each other by pressing, and at this time, the opposed partition walls 5 and 6 are moved in the direction to be away from each other by using one hand and the other hand. With movement of the opposed partition walls 5 and 6, the bellows partition walls 7 also extend to increase the volumetric capacity of the container inside 2a of the airtight container 2. Namely, the total pressure in the container inside 2a becomes negative pressure with respect to the total pressure of the container outside 2b. As a result, the check valve 9 opens as shown in Fig. 2 (d) to introduce external gas (atmospheric air) flowing via the gas guiding hole 5h into the container inside 2a. The check valve 9 is closed when the spring force of the pressing spring 9c surpasses the difference between the total pressure of the container inside 2a and the total pressure of the container outside 2b. At this time, the container inside 2a is filled with atmospheric air, and is in the state in which the oxygen g1 is separated and the nitrogen enriched gas g2 can be taken out by the above described procedure by pressing the opposed partition wall 5. By combining the above described three steps for taking out the nitrogen enriched gas g2, and the above described returning step for reuse, the gas separating device 1 can be used repeatedly, which is extremely economical and convenient.

### (First modification example of the gas separating device)

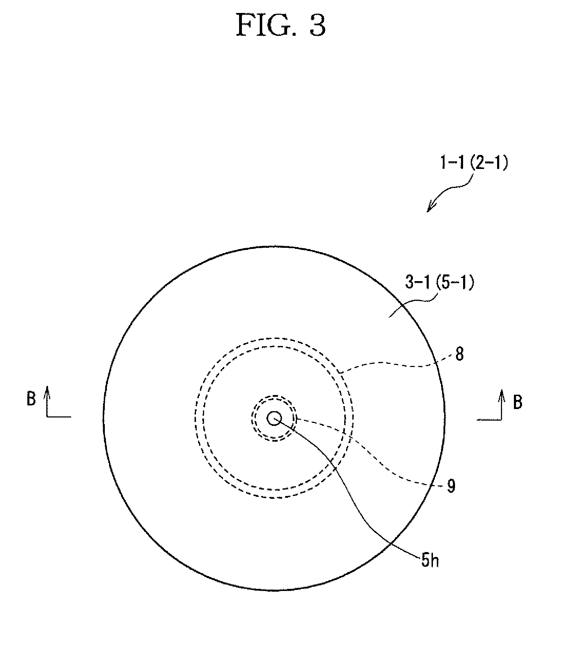

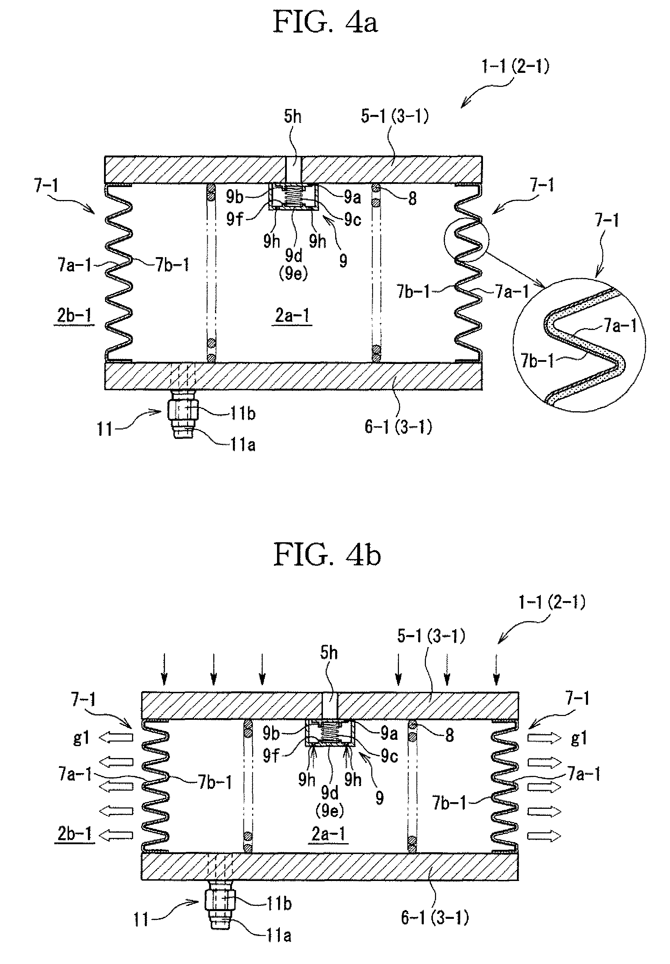

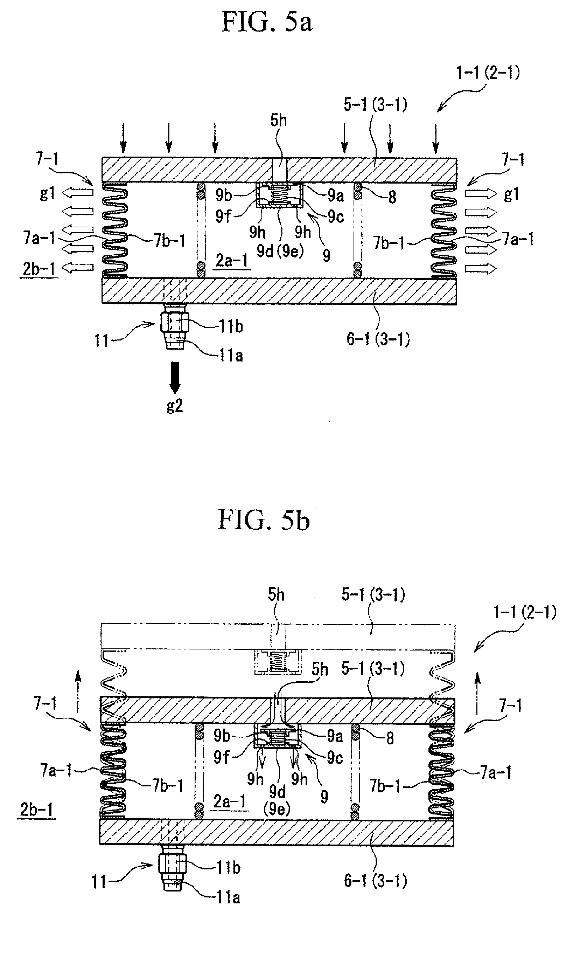

Referring to Figs. 3 to 5, a gas separating device 1-1 according to a first modification example will be described. Fig. 3 is a plane view of the gas separating device 1-1, and Figs. 4 and 5 are sectional views taken along the line B-B of the gas separating device 1-1 shown in Fig. 3. The gas separating device 1-1 differs from the above described gas separating device 1 mainly in the respect that the gas separating membrane provided at the opposed partition wall in the latter is provided at the bellows partition wall in the former. Here, on describing the gas separating device 1-1, for the common members to the gas separating device 1, the same reference numerals and characters as those used in the latter are used, and the description of the common members will be omitted (the same thing is properly applied to the other gas separating devices which will be described later).

The gas separating device 1-1 is generally constructed by an airtight container 2-1 including a container inside 2a-1 partitioned from a container outside 2b-1 by a partition wall 3-1, the relief valve 11 which functions as a gas outlet valve, and the check valve 9 for introducing a gas to the inside from the outside of the airtight container 2-1. The partition wall 3-1 is constructed by a pair of opposed partition walls 5-1 and 6-1 opposed in the vertical direction in Fig. 4, and bellows partition walls 7-1 disposed between the opposed partition wall 5-1 and the opposed partition wall 6-1. The opposed partition walls 5-1 and 6-1 are respectively the plates circular in plane view, namely, disks, in the same size composed of a metal or a hard synthetic resin, for example. Reference numeral 8 designates a return spring which presses the opposed partition wall 5-1 and the opposed partition wall 6-1 in the direction to be away from each other. The return spring 8 contracts when the opposed partition wall 5-1 is manually pressed (external force works), and extends when the pressing is released (external force is removed) to function as the return member for automatically returning the opposed partition wall 5-1 to the original position.

The bellows partition wall 7-1 is constructed by a gas permeable reinforcing membrane 7a-1 in a thin film form, and a gas separating membrane 7b-1 in a thin membrane form which is stuck to the side at the container inside, of the gas permeable reinforcing membrane 7a-1. The gas permeable reinforcing membrane 7a-1 is composed of, for example, a porous elastic resin film (elastic reinforcing membrane) of polysulfon and polyimide, and has the function of reinforcing the gas separating membrane 7b-1 while securing gas permeability to the gas separating membrane 7b-1 of silicon rubber. The bellows partition wall 7-1 is formed into a cylindrical bellows shape by folding back the sheet-shaped membrane, which is formed by bonding the gas permeable reinforcing membrane 7a-1 and the gas separating membrane 7b-1 to each other, in the staggered state inward and outward, and is constructed to be extendable and contractible in the axial direction (lengthwise direction) by extension and contraction of the folded portions. One end of the bellows partition wall 7-1 is closely adhered to the surface (opposed surface) of the opposed partition wall 5-1 at the side facing the opposed partition wall 6-1, and the other end thereof is closely adhered to the surface (opposed surface) of the opposed partition wall 6-1 at the side facing the opposed partition wall 5-1, respectively. By close adhesion of the bellows partition wall 7-1 to the opposed partition walls 5-1 and 6-1, the inside of the airtight container 2-1 is brought into the airtight state at the time of normal pressure (not in use), and is partitioned from outside when the check valve 9 and the relief valve 11 are closed. By manually pressing any one or both of the opposed partition walls 5-1 and 6-1 in the direction to be close to the other partition wall of each other, the bellows partition wall 7-1 contracts in the lengthwise direction to decrease the volumetric capacity of the inside of the airtight container 2-1, and by stopping manual pressing, the spring force of the return spring 8 mainly works to return the pressed partition wall 3-1 to the original position. By return of the partition wall 3-1, the volumetric capacity of the container inside 2a-1 of the airtight container 2-1 is also restored. The total pressure rises due to decrease in the volumetric capacity of the container inside 2a-1, and thereby, from the atmospheric air inside the container inside 2a-1, the included oxygen g1 is transmitted through the gas separating membrane 7b-1 to be separated and discharged to the container outside 2b-1. The gas permeable reinforcing membrane 7a-1 does not interfere with gas separation, or if it does, the interference is very slight, due to its gas permeability. According to the gas separating membrane 7b-1 of the bellows partition wall 7-1, it is formed in the bellows shape, and therefore, it can secure a larger surface area than the above described gas separating membranes 13, ... Therefore, according to the gas separating device 1-1, more efficient gas separation can be realized. It should be noted that the gas separating device 1 may be provided with the bellows partition wall 7-1 of the gas separating device 1-1, which has the gas separating function, or the latter may be provided with the opposed partition wall 5 of the former, which has the gas separating function. Though not shown in the drawings, if the above described pressing operation is performed via a jack structure, the burden by the pressing operation can be reduced.

### (Second modification example of the gas separating device)

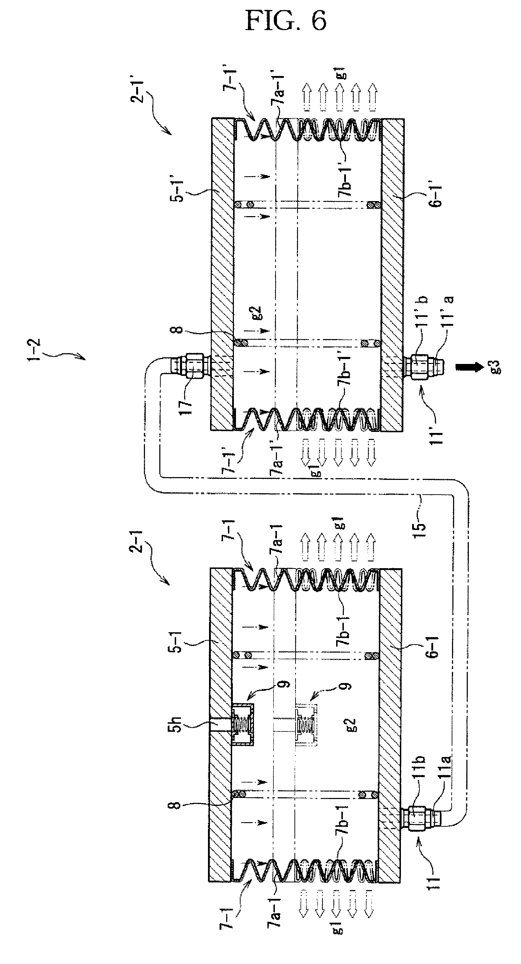

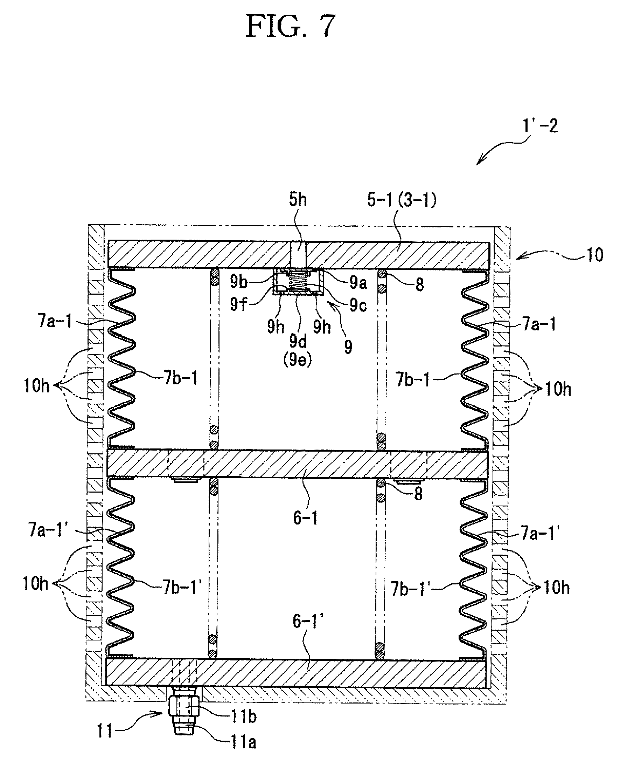

Referring to Figs. 6 and 7, a gas separating device 1-2 according to a second modification example will be described. Figs. 6 and 7 are vertical sectional views of the gas separating device 1-2. The gas separating device 1-2 differs from the above described gas separating device 1 or the gas separating device 1-1 mainly in the respect that the former has two airtight containers while each of the latter two devices has only one. Here, the case where an auxiliary airtight container 2-1' is connected in series to the above described airtight container 2-1 will be described.

The structure of the airtight container 2-1 shown in Fig. 6 is as described above, and the auxiliary airtight container 2-1' basically has the same structure as the airtight container 2-1, and differs from it in the following three respects. Namely, the auxiliary airtight container 2-1' differs from the airtight container 2-1 in the respect that an opposed partition wall 5-1' of the auxiliary airtight container 2-1' is provided with the communication check valve 17, the respect that the gas guiding hole (check valve) is not provided, and the respect that since the return spring is not provided, the bellows partition wall 7-1' is contracted in the ordinary state. The communication check valve 17 is constructed to be communicable with the relief valve 11 of the airtight container 2-1 via a communication pipe 15, and to receive the gas g2 supplied from the relief valve 11 but not to allow backflow of the gas inside the auxiliary container 2-1'. Namely, one-way operation from the airtight container 2-1 to the auxiliary container 2-1'. The nitrogen enriched gas g2 taken out from the relief valve 11 by the gas separating function of the airtight container 2-1 is fed into the auxiliary airtight container 2-1' via the communication pipe 15 and the communication check valve 17. At this time, the operation of the airtight container 2-1 may be performed once (extension or contraction of the bellows partition wall 7-1 is once), or may be performed a plurality of times. By performing the operation plurality of times, the gas g2 of the amount of plurality of times of operation is fed into the auxiliary airtight container 2-1'.

When the gas g2 is applied, the bellows partition wall 7-1' of the auxiliary airtight container 2-1' is extended by the total pressure of the supplied gas g2 to increase the internal volumetric capacity of the auxiliary airtight container 2-1'. Increase in the internal volumetric capacity stops with stoppage of the supply of the nitrogen enriched gas g2. When the opposed partition wall 5-1' of the auxiliary airtight container 2-1' is pressed in the same procedure as for the opposed partition wall 5-1 of the airtight container 2-1, the total pressure of the gas g2 in the auxiliary container 2-1' rises and becomes higher than atmospheric pressure, Namely, a pressure difference occurs between the inside and the outside of the auxiliary airtight container 2-1'. The pressure difference which occurs further separates and discharge the oxygen g1 from the nitrogen enriched gas g2 in the auxiliary airtight container 2-1' via the gas separating membrane 7b-1, and thereby generates a nitrogen enriched gas g3 higher in the concentration of nitrogen. When the opposed partition wall 5-1' is further pressed here, the total pressure of the nitrogen enriched gas g3 in the auxiliary airtight container 2-1' further increases, and this opens the relief valve 11' of the auxiliary airtight container 2-1' to make it possible to take out the nitrogen enriched gas g3. As is understood from the above, according to the gas separating device 1-2, by connecting the auxiliary airtight container 2-1' in series, the nitrogen enriched gas g3 which is higher in concentration than the nitrogen enriched gas g2 taken out of the airtight container 2-1 can be taken out.

The gas separating device 1-2 is constructed by including the two airtight containers connected in series, and by additionally connecting one, or two or more of airtight containers to a relief valve 11' of the above described auxiliary airtight container 2-1', a nitrogen enriched gas of higher concentration can be further obtained. Further, as shown in Fig. 7, by constructing the opposed partition wall 6-1 of the airtight container 2-1 to be a common partition wall, a gas separating device 1'-2 in which the opposed partition wall 5-1' and the communication pipe 15 of the auxiliary airtight container 2-1' are omitted can be made. The gas separating device 1'-2 is housed in a gas permeable container 10 including a number of vent holes 10h with an upper part opened.

### (Third modification example of the gas separating device)

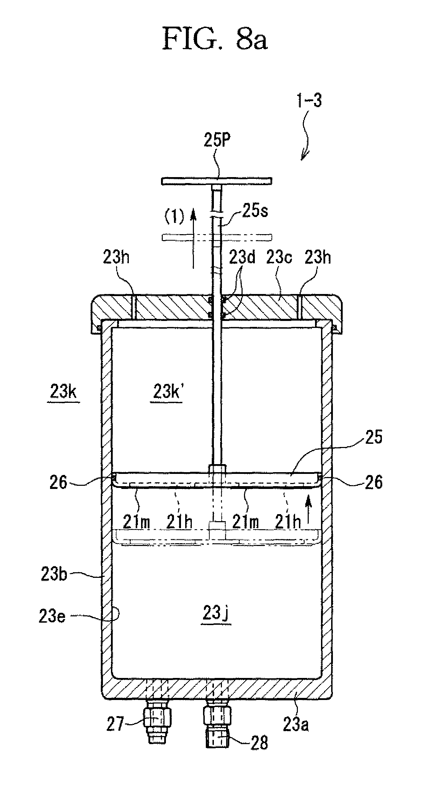

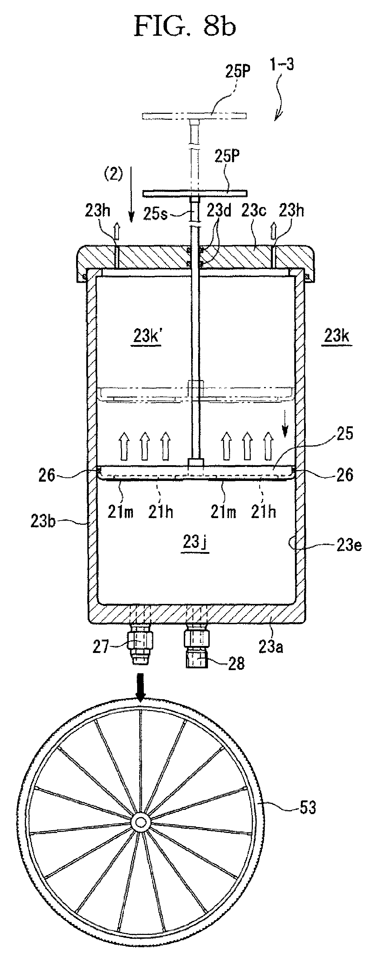

Referring to Fig. 8, a gas separating device 1-3 according to a third modification example will be described. Fig. 8 is a vertical sectional view of the gas separating device 1-3. The gas separating device 1-3 includes an airtight container 22 with its inside and outside partitioned by a partition wall 21. The partition wall 21 is constructed by including a cylindrical fixed partition wall 23 having a hollow part 24, and a movable partition wall 25 which is in the hollow part 24 and reciprocatingly slidable in a lengthwise direction of the hollow part 24 (in the vertical direction in Fig. 8) with respect to an inner peripheral surface 23e of the fixed partition wall 23. The fixed partition wall 23 includes a circular bottom part 23a entirely composed of a metal or a synthetic resin, and an annular peripheral wall 23b raised from the outer periphery of the bottom part 23a. The shape of the bottom part 23a is formed to be circular because with the circular shape, assurance of airtightness between the bottom part 23a and the inner peripheral surface 23e is considered to be relatively easy, but it may be in any shape as long as it can ensure the airtightness of the hollow part 24 in the airtight container 22. Since the shape of the bottom part 23a is made circular, the shape of the annular peripheral wall 23b is also made circular corresponding to this. Reference numeral and character 23c designates a lid body which is threadedly fixable to the upper end portion of the annular peripheral wall 23b.

An annular packing 26 is closely contacted and fixed to the outer periphery of the movable partition wall 25, and by the function of the annular packing 26, the movable partition wall 25 can slide while close contact between the movable partition wall 25 and the inner peripheral surface 23 is assured. Airtightness of an inside 23j of the airtight container 22 is kept by assurance of close contact. The annular packing 26 also has the function of partitioning the inside 23j of the air tight container 22 and an outside 23k, and constitutes a part of the partition wall 21. A plurality of vent holes 21h, .. are formed in the movable partition wall 25 by being penetrated in a thickness direction, and the respective vent holes 21h are closed by gas separating membranes 21m, ... Namely, each of the gas separating membranes 21m has the function of partitioning the outside and the inside of the airtight container 22, and constitutes a part of the partition wall 21. A slide bearing 23d is buried and fixed in the center of the lid body 23c, and the slide bearing 23d is a member for reciprocatingly sliding an operation stick 25s designated by the reference numeral and character 25s in the thickness direction of the lid body 23c (movable direction of the movable partition wall 25). One end of the operation stick 25s at the side of the inside of the airtight container 22 is fixed to the movable partition wall 25, and an operation panel 25p is fixed to one end at the side of the outside of the airtight container 22. The operation stick 25s is constructed to cause the movable partition wall 25 in the airtight container 22 to reciprocatingly slide by its reciprocating slide, namely, to increase and decrease the volumetric capacity of the hollow part 24 closed by the movable partition wall 25. Reference numeral and character 23h, and 23h designate gas venting holes formed in the thickness direction of the lid body 23c. Each of the gas venting holes 23h has the function of communicating with a space 23k' between the lid body 23c and the movable partition wall 25, and by the communication, the above described space 23k' becomes a part of the outside 23k of the airtight container 22. Reference numeral 27 designates a relief valve, and reference numeral 28 designates a check valve which allows inflow of only an external gas, respectively.

Now, a use method of the gas separating device 1-3 will be described. When the operation panel 25p is held by a hand and is lifted up in the direction of the arrow (1) shown in Fig. 8 (a), with this, the movable partition wall 25 slides in the same direction with the operation stick 25s. Thereby, the volumetric capacity of the inside 23j of the airtight container 22 increases to be at negative pressure with respect to the outside 23k, and therefore, the check valve 28 opens to introduce atmospheric air into the inside 23j of the airtight container 22. At this time, the relief valve 27 remains to be closed. Next, the operation panel 25p is pressed down in the direction of the arrow (2) shown in Fig. 8 (b) to slide the movable partition wall 25 in the same direction, whereby the volumetric capacity of the inside 23j of the airtight container 22 decreases to increase the total pressure which is P to P1, and the oxygen g1 (shown by the hollow arrows) is separated and discharged to the outside 23k' from the atmospheric air in the inside 23j through the gas separating membrane 21m. The nitrogen enriched gas g2 remains in the inside 23j of the airtight container 22. At this time, when the movable partition wall 25 is further pressed down to increase the total pressure of the nitrogen enriched gas g2 to P2, the relief valve 27 opens to push out the nitrogen enriched gas g2. By connecting a sealed container (not shown in the drawing) or the like to the relief valve 27, the nitrogen enriched gas g2 can be taken out. If the relief valve 27 is connected to a charge port of a rubber tire 53 of a bicycle, a motor cycle or the like directly or indirectly via a charge member or the like (not shown in the drawing), instead of the above described sealed container, the nitrogen enriched gas g2 can be charged into the rubber tire 53. At this time, by lifting up the operation panel 25p in the direction of the arrow (1) again, the movable partition wall 25 slides in the same direction to introduce atmospheric air into the inside 23j through the check valve 28, and the gas separating device is brought into the state capable of performing the next gas separating operation.

### (Fourth modification example of the gas separating device)

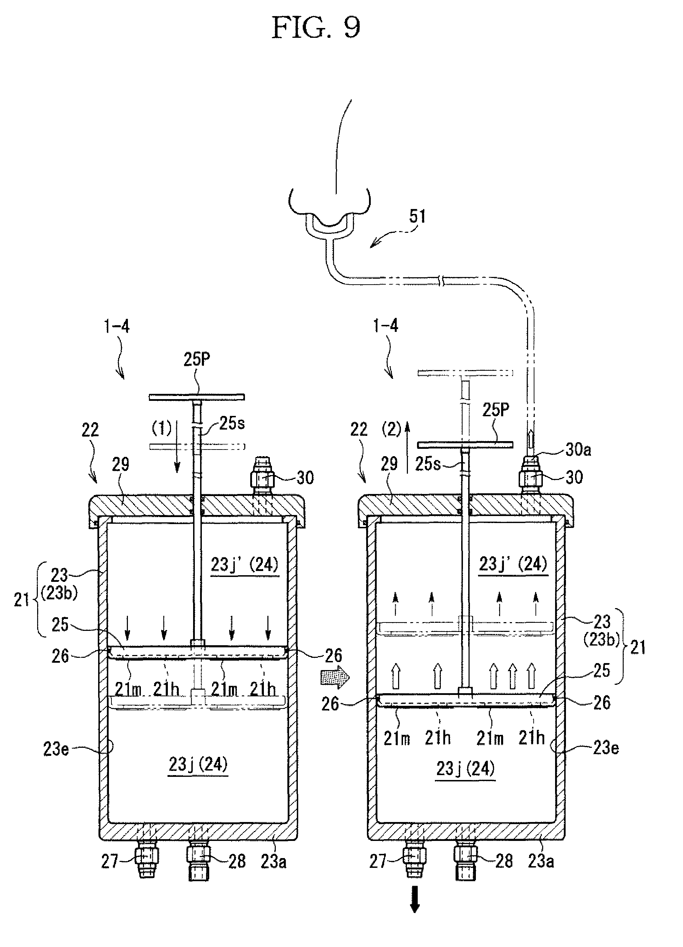

Referring to Fig. 9, a gas separating device 1-4 according to a fourth modification example will be described. Fig. 9 is a vertical sectional view of the gas separating device 1-4. The gas separating device 1-4 includes the construction similar to the gas separating device 1-3 described above, and they differ from each other in the respect that the oxygen g2 which is discharged to the outside of the container in the latter is designed to be capable of being taken out. Therefore, the members common to both of them are only shown in Fig. 9 by the reference numerals and characters shown in Fig. 8, and the explanation of them will be omitted as much as possible.

The gas separating device 1-4 includes an airtight container 22 with its inside and outside partitioned by a partition wall 21. The partition wall 21 is constructed by including a cylindrical fixed partition wall 23 having a hollow part 24, and a movable partition wall 25 which is in the hollow part 24 and reciprocatingly slidable in a lengthwise direction of the hollow part 24 (in the vertical direction in Fig. 9) with respect to an inner peripheral surface 23e of the fixed partition wall 23 via the packing 26. The fixed partition wall 23 includes a circular bottom part 23a entirely composed of a metal or a synthetic resin, and an annular peripheral wall 23b raised from the outer periphery of the bottom part 23a. The structure of them does not differ from the structure of the gas separating device 1-3 so far. Reference numeral 29 shown in Fig. 9 designates a lid body threadedly fixable to the upper end portion of the annular peripheral wall 23b. The lid body 29 is constructed to be capable of airtightly closing the hollow part 24, and thereby, an airtight container inside 23j and an airtight space 23j' partitioned by the movable partition wall 25 exist side by side in the airtight container 22. In other words, the fixed partition wall 23, the movable partition wall 25 and the packing 26 constitute the airtight cylindrical body, and further, in other words, the airtight container 22, and an airtight container for a separated gas which seals the gas separated from the gas sealed in the airtight container 22 are provided side by side with the gas separating membrane 21 therebetween. In this case, the total volumetric capacity of the airtight container inside 23j and the airtight space 23j' is constant, and therefore, if the former is increased by slide of the movable partition wall 25 (gas separating membrane 21m) which partitions both of them, the latter is decreased, while if the former is decreased on the other hand, the latter increases. The lid body 29 is provided with a separated gas outlet valve (relief valve 30) which allows only the passage of the gas (oxygen) g1 in the airtight space 23j' to the outside. In this case, the relief valve 30 includes a nozzle structure 30a, and if a gas supply tool 51 for supplying oxygen by being fitted ino a nose, for example, is connected to the relief valve 30 via the nozzle structure 30a, oxygen can be supplied to a human body.

Now, a use method of the gas separating device 1-4 will be described. When the operation panel 25p is held by a hand and is lifted up in the direction of the arrow (1) shown in Fig. 9 (a), with this, the movable partition wall 25 slides in the same direction with the operation stick 25s. Thereby, the volumetric capacity of the airtight container inside 23j increases to be at negative pressure with respect to the outside 23k', and therefore, the check valve 28 opens to introduce atmospheric air into the airtight container inside 23j. At this time, the relief valve 27 remains to be closed. Next, the operation panel 25p is pressed down in the direction of the arrow (2) shown in Fig. 9 (b) to slide the movable partition wall 25 in the same direction, whereby the volumetric capacity of the airtight container inside 23j decreases to increase the total pressure which is P to P1, and the oxygen g1 (shown by the hollow arrows) is separated and discharged to the airtight space 23j' from the atmospheric air in the airtight container inside 23j through the gas separating membrane 21m. The nitrogen enriched gas g2 remains in the airtight container inside 23j. At this time, when the movable partition wall 25 is lifter up, the total pressure of the oxygen g1 in the airtight space 23j' increases to open the relief valve 30 to make it possible to take out the oxygen g1. When the movable partition wall 25 is pressed down to the lowermost end before or after removal of the oxygen g1 to increase the total pressure of the nitrogen enriched gas g2 in the air tight container inside 23j to P2, the relief valve 27 opens to push out the nitrogen enriched gas g2. If a sealed container (not shown in the drawing) or the like is connected to the relief valve 27, the nitrogen enriched gas g2 can be taken out. Here, by lifting up the operation panel 25p in the direction of the arrow (1) again, the movable partition wall 25 slides in the same direction to introduce atmospheric air into the airtight container inside 23j through the check valve 28, and the gas separating device is brought into the state capable of performing the next gas separating operation.

### (Fifth modification example of the gas separating device)

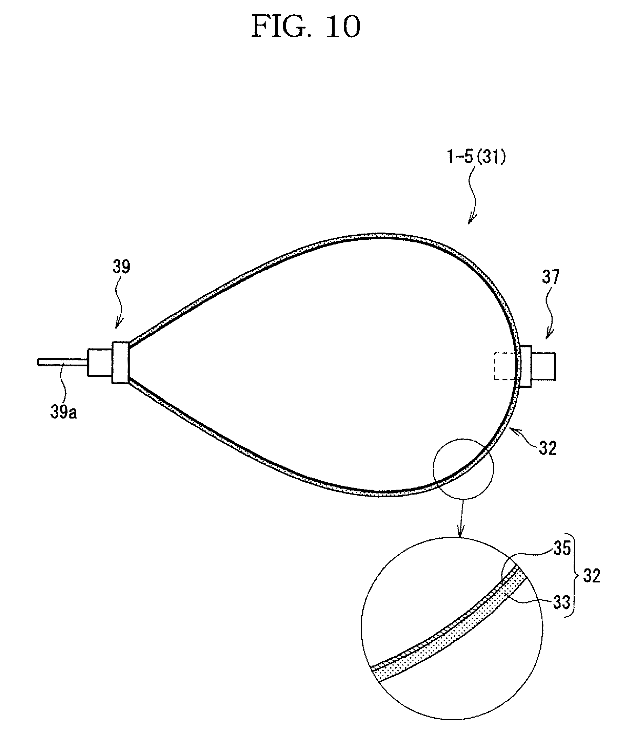

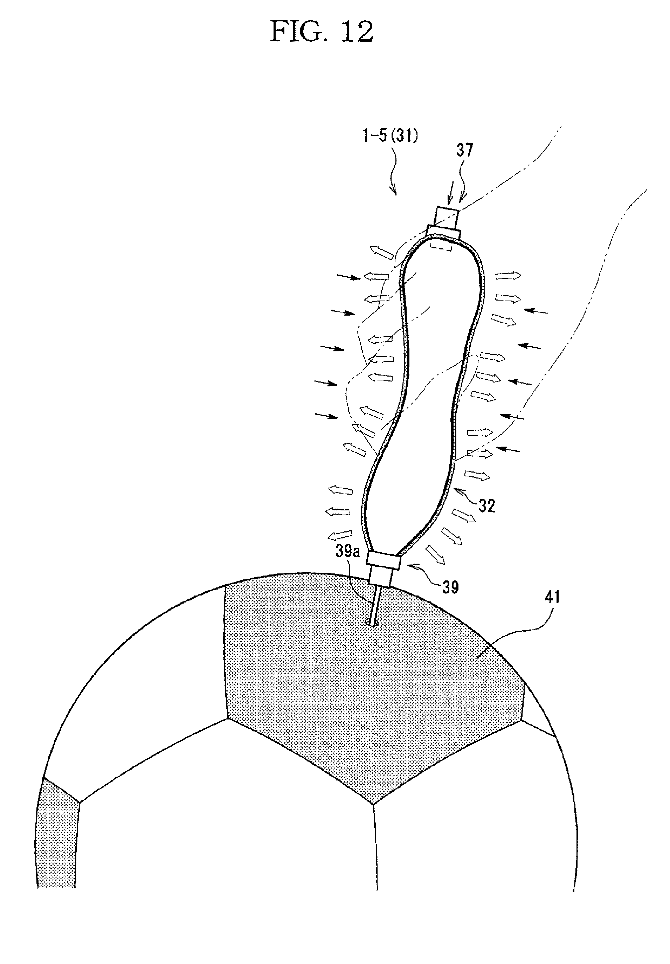

Referring to Figs. 10 to 12, a gas separating device 1-5 according to a fifth modification example will be described. Figs. 10 to 12 are vertical sectional views of the gas separating device 1-5. The gas separating device 1-5 includes an airtight container 31 in the shape similar to a fig shape having a large-diameter part and a taper part. The airtight container 31 includes a partition wall 32, and the partition wall 32 has its entire part (that may be a part) in its area direction constructed by an elastic reinforcing membrane 33 which has gas permeability and deforms to be returnable, and a gas separating membrane 35 which is stuck to an inner wall of the elastic reinforcing membrane 33. The reason why the elastic reinforcing membrane 33 is given gas permeability is that by ensuring gas permeability to the gas separating membrane 35, the gas separating function of the gas separating membrane 35 is allowed to be exhibited. A check valve 37 is provided in the partition wall 32 corresponding to the large diameter part of the airtight container 31, and a gas outlet valve (relief valve 39) is provided in the tip end of the taper part thereof, respectively. The check valve 37 is constructed to allow only introduction of a gas into the airtight container 31. A needle-shaped nozzle 39a is integrated with the relief valve 39, and the nozzle 39a is constructed to be insertable into an air intake port of a ball 41 for ball game such as a soccer ball. The partition wall 32 has the whole of it constructed by the elastic reinforcing membrane 33 and the gas separating membrane 35, but a part of the partition wall 32 may be constructed by an elastic material instead of the above described two membranes. The elastic material in this case does not have a gas separating function, and, for example, when there is the problem of existence of the part for which the gas separating membrane cannot be used exists because of the shape, strength and the like of the airtight container 31, such a problem can be solved by using the elastic material.

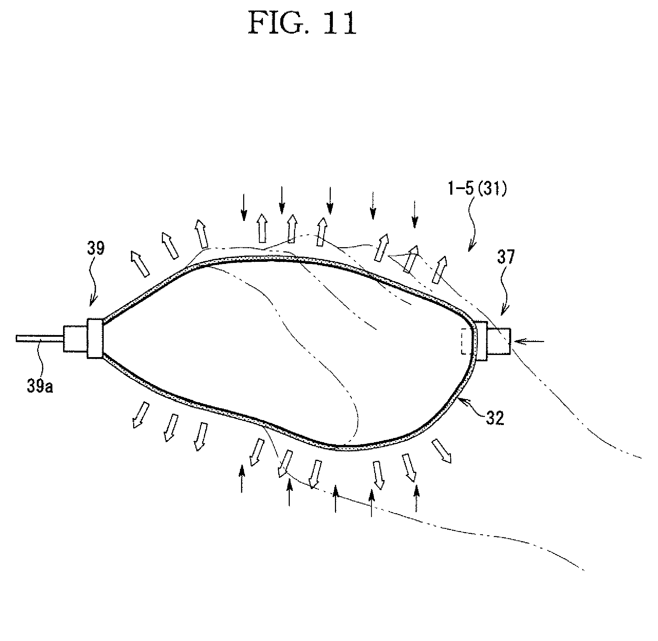

Based on Figs. 10 to 12, a use method of the gas separating device 1-5 will be described. As shown in Fig. 11, when the air separating device 1-5 is gripped and pressed, the partition wall 32 deforms and inner volumetric capacity of the airtight container 31 decreases. Due to decrease in the volumetric capacity, the total pressure P of the atmospheric air in the inside of the airtight container 31 is increased to be the total pressure P1. Here, the gas (oxygen) g1 included in the atmospheric air is transmitted through the air separating membrane 35 and separated and discharged to the outside, and the nitrogen enriched gas g2 remains in the inside. When the airtight container 31 is further pressed, the total pressure P1 in the inside is increased to be the total pressure P2. When the total pressure becomes P2, the relief valve 39 opens, and the nitrogen enriched gas g2 is pushed out from the tip end of the nozzle 39a. If the nozzle 39a is inserted into the air intake port of the ball 41 for ball game, the nitrogen enriched gas g2 can be charged into the ball 41 for ball game. If the hand pressing it is released, the partition wall 32 returns by its elastic force and returns the inner volumetric capacity. By return of the inner volumetric capacity, the total pressure in the inside becomes negative pressure with respect to the atmospheric pressure, and therefore, the check valve 37 opens to introduce atmospheric air into the airtight container 31. The operation of pressing and releasing the pressing can be repeatedly performed, and each time, a predetermined amount of nitrogen enriched gas can be charged.

### (Sixth modification example of gas Separating Device)

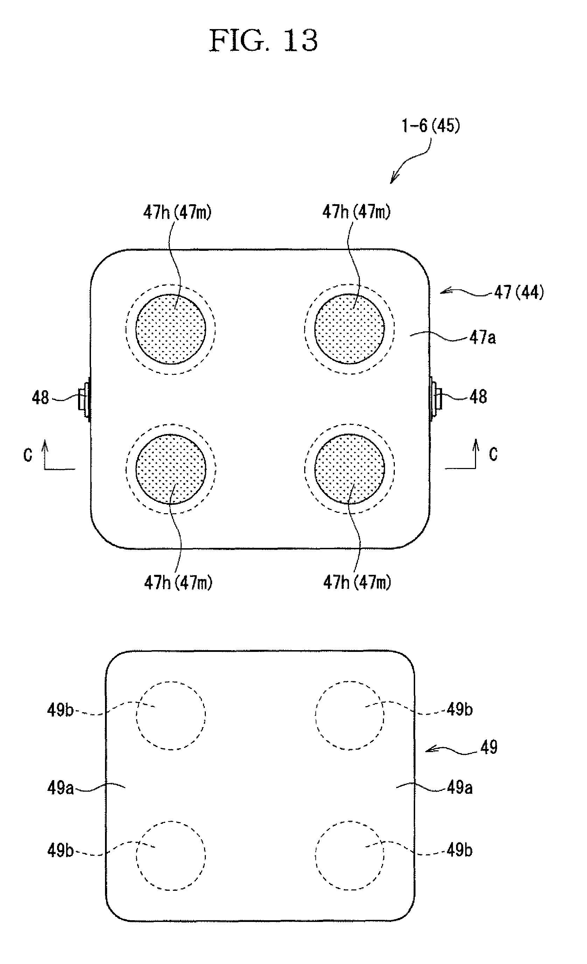

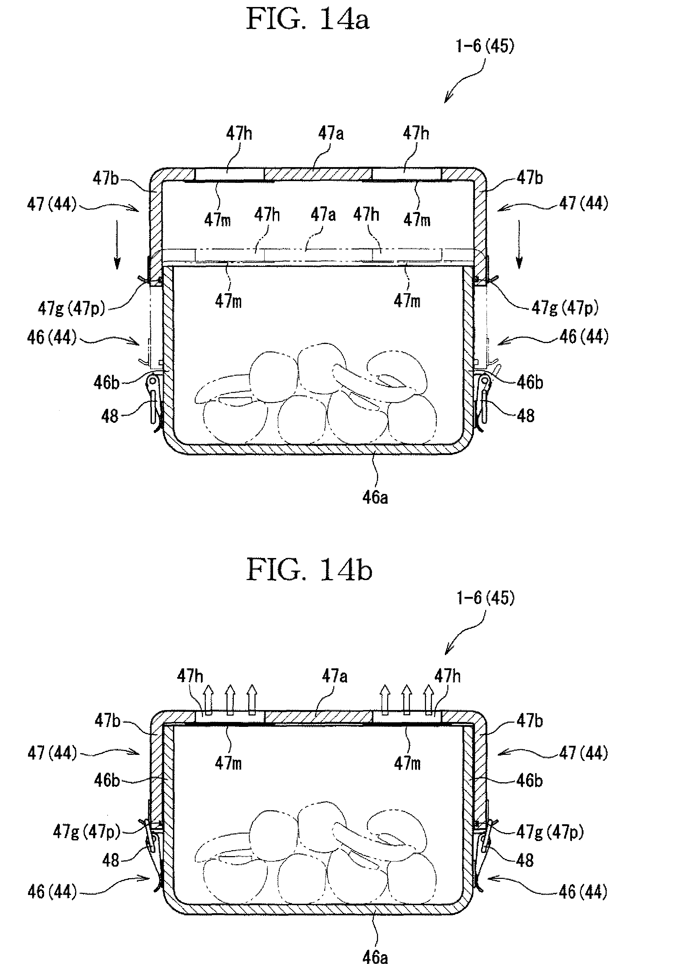

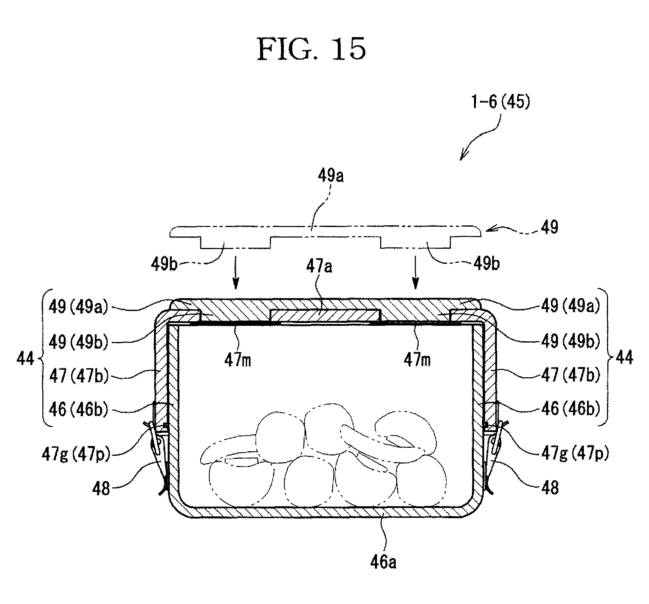

Referring to Figs. 13 to 15, a gas separating device 1-6 according to a sixth modification example will be described. Fig. 13 is a plane view of the gas separating device 1-6, and Figs. 14 and 15 are sectional views taken along the line C-C of the gas separating device 1-6 shown in Fig. 13. The gas separating device 1-6 includes an airtight container 45 with an inside and an outside partitioned by a partition wall 44, and the airtight container 45 is constructed to be capable of housing a stored material such as food therein. Namely, the partition wall 44 is generally constructed by a lower container 46 with an upper end opened, and an upper container 47 with a lower end opened, and a lid body 49, and all the members are composed of a synthetic resin as the main material. The lower container 46 is generally constructed by a bottom part 46a and a peripheral wall 46b which is raised from a peripheral edge of the bottom part 46a, and a space for housing a stored material is formed in the inside of the container. On the other hand, the upper container 47 is generally constructed by a top plate part 47a which is rectangular in plane view, and a peripheral wall 47b suspended from a peripheral edge of the top plate part 47a, and is formed into the shape and size capable of being put on the lower container 46. The peripheral wall 46b of the lower container 46 when the upper container 47 is put thereon is constructed to be located inside the peripheral wall 47b of the upper container 47 which is put thereon. It is possible to locate the peripheral wall 46b outside the peripheral wall 47b in contrast with this, but with such a construction, the peripheral wall 47b is caused to enter into the lower container 46 to cause the possibility of contact of the peripheral wall 47b with the stored material in the lower container 46. Such contact can have an adverse effect on the operation of putting it on the lower container, and therefore, the peripheral wall 47b of the upper container 47 is located outside the peripheral wall 46b of the lower container 46. The upper container 47 which is put on the lower container 46 is constructed to be able to be locked by a lock mechanism 48 for locking both of them.

The top plate part 47a of the upper container 47 is provided with vent holes 47h, .., and a gas separating membrane 47m which airtightly closes each of the vent holes 47h. Namely, the respective gas separating membranes 47m constitute a part of the partition wall 44 which partitions the inside and the outside. An annular groove 47g laterally U-shaped in section which goes round the peripheral wall 47b is formed on the inner side (the side facing the lower container 46) of the lower end of the peripheral wall 47b, and an annular packing 47p is closely adhered and fixed to the annular groove 47g. The annular packing 47p is formed to lie off the annular groove 47g slightly in a width direction. This is because when the upper container 47 is put on the lower container 46, the portion of the annular packing 47b which lies off the annular groove 47g closely contacts the outer peripheral surface of the peripheral wall 46b of the lower container 46 and enables the latter to slide with respect to the former while keeping airtightness. The lid body 49 is generally constructed by a lid main body 49a rectangular in plane view which is slightly smaller than the top plate part 47a of the upper container 47, and closing protrusions 49b, .. which protrude downward from a bottom surface (the surface facing the vent holes 47h when it is fitted in) of the lid main body 49a. The number of closing protrusions 49b is the same as the number of the vent holes 47h, and each of the closing protrusions 49b is formed into the shape capable of airtightly closing the vent hole 47h without contacting the gas separating membrane 47m when the lid body 49 is fitted (put) on the top plate part 47a. Airtight closing of the lid body 49 suppresses transmission of a gas through the gas separating membrane 47m. Namely, the lid body 49 airtightly covers the air separating membrane 47m to construct a part of the partition wall 44 in place of the air separating membrane 47m. The lid body 49 is constructed to be able to cover the air separating membrane 47m from outside the airtight container 45, but instead of the lid body 49, the structure capable of covering the air separating membrane 47m from the inside of the airtight container 45 can be adopted.

A use method of the gas separating device 1-6 will be described. First, as shown in Fig. 14 (a), the upper container 47 is put on the lower container 46 from above the lower container 46 containing a stored material. At this time, by the function of the annular packing 47p, an airtight container 45 with the lower container 46 and the upper container 47 combined is formed. The inside of the airtight container 45 is under the atmosphere of atmospheric air. Next, when the upper container 47 is pressed, the volumetric capacity of the inside of the airtight container 45 decreases and the total pressure of the inside becomes high, whereby at least oxygen is separated and discharged from the atmospheric air in the airtight container 45 (see Fig. 14 (b)). At this time, the inside of the airtight container 45 is under a nitrogen enriched atmosphere. The lower container 46 and the upper container 47 are locked by operating the lock mechanism 48, and thereafter, the lid body 49 is put on the top plate 47a to airtightly close the respective vent holes 47h as shown in Fig. 15. By putting the lid body 49 thereon, gas transmission through the gas separating membrane 47m ceases to exist or it becomes an ignorable amount if it exists. The stored material in the airtight container 45 is housed in the nitrogen atmosphere, and therefore, as compared with the case where it is exposed to atmospheric air, the possibility of being oxidized (deteriorated) is extremely low. Accordingly, it becomes possible to store the stored material housed in the airtight container 45 for a long period of time without deterioration or with less deterioration.

The food includes, for example, a liquid such as coffer or tea, a solid such as a granular favoring material, a fluid such as jelly, and mixtures of them. If such food is housed in the airtight container under the nitrogen enriched atmosphere, the oxidization (deterioration) of it can be suppressed as much as possible, and as compared with the case where the same food is stored in the atmospheric air, the taste and freshness of it can be kept for a long time. It goes without saying that food includes fresh food such as meat, fresh fish and vegetable, and it is considered to be also preferable to store such food in the airtight container in a nitrogen atmosphere for the reason of suppression of quality degradation. On the other hand, it is considered that such fresh food breathes and needs a certain degree of oxygen, though it is still in the research stage, and therefore, it is necessary to set the oxygen concentration in the inside of the airtight container to be somewhat high, namely, to set the separation and discharge amount of oxygen to be a little small.

### (Seventh modification example of gas separating device)

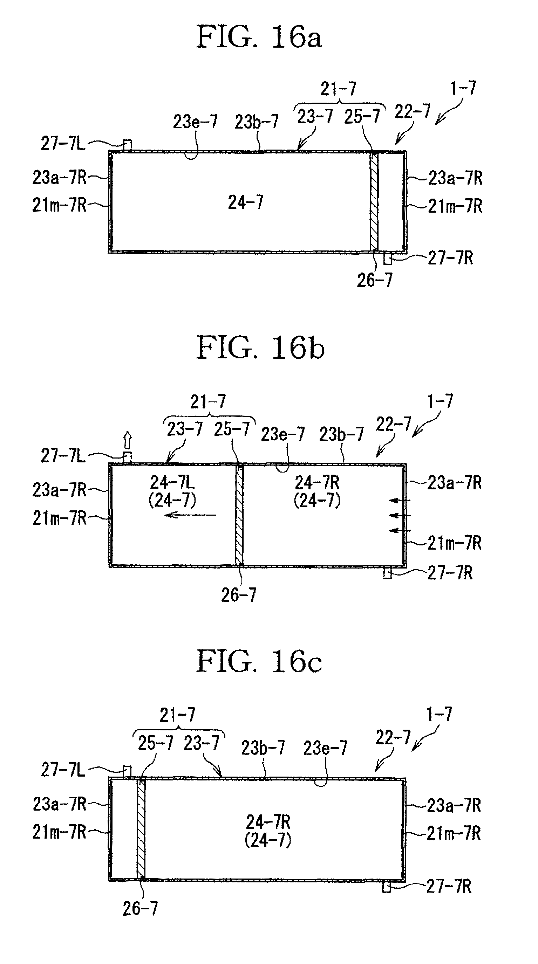

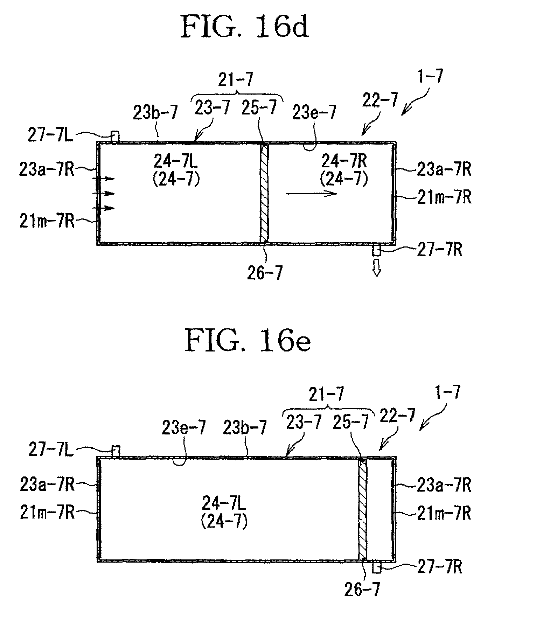

Referring to Fig. 16, a gas separating device 1-7 according to a seventh modification example will be described. Fig. 16 is a sectional view of the gas separating device 1-7. The gas separating device 1-7 includes an airtight container 22-7 with an inside and an outside partitioned by a partition wall 21-7. The partition wall 21-7 is constructed by including a cylindrical fixed partition wall 23-7 having an airtight chamber 23-7, a movable partition wall 25-7 which is inside the airtight chamber 24-7 and reciprocatingly slidable in the lengthwise direction (lateral direction in Fig. 16) of the airtight chamber 24-7 with respect to an inner peripheral surface 23e-7 of the fixed partition wall 23-7. Reciprocating sliding of the movable partition wall 25-7 is performed by a drive structure (not shown in the drawing). The fixed partition wall 23-7 is constructed by an annular peripheral wall 23b-7 entirely composed of a metal or a synthetic resin, and circular side wall parts 23a-7R and 23a-7L which close both ends of the annular peripheral wall 23b-7. The shapes of the side wall parts 23a-7R and 23a-7L are constructed to be circular because it is considered that if they are circular, assurance of airtightness with the inner peripheral surface 23e-7 is relatively easy, but as long as airtightness of the airtight chamber 24-7 in the airtight container 22-7 can be assured, any shape other than a circular shape may be adopted. Since the shapes of the side wall parts 23a-7R and 23a-7L are made circular, the shape of the annular peripheral wall 23b-7 is made cylindrical corresponding to this. In Fig. 16, reference numeral and character 24-7R designates an air tight chamber at the right side from the movable partition wall 25-7 in the airtight chamber 24-7 facing the drawing, and reference numeral and character 24-7L designates an airtight chamber at the left side from the same. Figs. 16 (a) and 16 (e) show the state in which the volumetric capacity of the airtight chamber 24-7R is substantially zero (the state in which the movable partition wall 25-7 is located in the vicinity of the side wall part 23a-7R), and Fig. 16 (c) shows the state in which the volumetric capacity of the airtight chamber 24-7L is substantially zero (the state in which the movable partition wall 25-7 is located in the vicinity of the side wall part 23a-7L), respectively.

An annular packing 26-7 is closely adhered and fixed to the outer periphery of the movable partition wall 25-7, and by the function of the annular packing 26-7, slide is made possible while assuring close contact (airtightness) between the movable partition wall 25-7 and the inner peripheral surface 23e-7. By assuring close contact, airtightness of the inside of the airtight container 22-7, namely, airtightness inside the airtight chamber 24-7 (the airtight chamber 24-7R, the airtight chamber 24-7L) is kept. The annular packing 26-7 also has the function of partitioning the airtight chamber 24-7 of the airtight container 22-7 and the outside, and constitutes a part of the partition wall 21-7. A plurality of vent holes (not shown in the drawings) are formed in the side wall parts 23a-7R and 23a-7L by being penetrated through them in the thickness direction, and the respective vent holes are closed by gas separating membranes 21m-7R and 21m-7L. Namely, the gas separating membrane 21m-7R and 21m-7L have the function of partitioning the inside and the outside of the airtight container 22-7, and constitutes a part of the partition wall 21-7. Reference numerals and characters 27-7R and 27-7L designate relief valves (check valves).

In this case, the gas separating membrane 21m-7R is constructed to be able to separate and introduce the gas g1 (for example, an oxygen enriched gas) included in the gas G from the gas G (for example, atmospheric air) in the outside of the airtight container 22-7 into the inside of the airtight chamber 24-7R when the total pressure P of the inside of the airtight chamber 24-7R becomes the total pressure P1 (P > P1) or lower by increase in volumetric capacity (namely, pressure reduction) by movement of the movable partition wall 25-7. Further, the other gas separating membrane 21m-7L is constructed to be able to separate and introduce the gas g1 included in the gas G from the gas G into the inside of the airtight chamber 24-7L when the total pressure P' of the inside of the airtight chamber 24-7L becomes the total pressure P'1 (P' > P'1) or lower by increase in volumetric capacity by movement of the movable partition wall 25-7. Further, the relief valve 27-7R is constructed to communicate with the inside and the outside of the airtight chamber 24-7R to be able to discharge the gas g1 inside the airtight chamber 24-7R to the outside when the total pressure P1 of the inside of the airtight chamber 24-7R becomes P2 (P2 > P1) due to decrease in the volumetric capacity of the inside of the airtight chamber 24-7R by movement of the movable partition wall 25-7, and the other relief valve 27-7L is constructed to communicate with the inside and the outside of the airtight chamber 24-7L to be able to discharge the gas g1 inside the airtight chamber 24-7L when the total pressure P'1 of the inside of the airtight chamber 24-7L becomes P'2 (P'2 > P'1) due to decrease in the volumetric capacity of the inside of the airtight chamber 24-7L by movement of the movable partition wall 25-7. In order to discharge the oxygen enriched gas g1 outside from the airtight chamber 24-7R (airtight chamber 24-7L), the total pressure P2 (P'2) for opening the relief valve 27-7R (relief valve 27-7L) has to be higher than the outside pressure of the airtight container 22-7 (when the outside pressure is higher, the relief valve does not open). The inner and outer pressure difference can discharge the oxygen enriched gas g1 inside the airtight chamber 24-7R (airtight chamber 24-7L) outside via the gas separating membrane 21m-7R (gas separating membrane 21m-7L) in some cases. However, in such a case, comparing the exhaust via the relief valve 27-7R (relief valve 27-7L) and the exhaust via the gas separating membrane 21m-7R (gas separating membrane 21m-7L), the exhaust amount of the oxygen enriched gas g1 via the former is much larger, and the exhaust amount via the latter is very small. Accordingly, substantial discharge of the oxygen enriched gas g1 is performed via the relief valve 27-7R (relief valve 27-7L). Other modification examples that will be described later are the same in this respect. The gas separating membrane 21m-7R and the gas separating membrane 21 m-7L are reinforced by the integrated gas permeable reinforcing membranes so as to be able to withstand pressurization and pressure reduction. The respective modification examples that will be described later are the same in the respect that the gas separating membrane is reinforced by the air permeable reinforcing membrane. However, if the gas separating membrane itself includes sufficient strength, any gas separating membrane introduced in this specification including the seventh modification example may omit the gas permeable reinforcing membrane and may be solely used.

A use method of the gas separating device 1-7 will be described now. Change of the volumetric capacity ratio is repeatedly performed between the one airtight chamber 24-7R and the other airtight chamber 24-7L by reciprocating movement of the movable partition wall 25-7. The volumetric capacity of the airtight chamber 24-7L increases by the amount of decrease in the volumetric capacity of the airtight chamber 24-7R, and in contrast with this, the volumetric capacity of the airtight chamber 24-7L decreases by the amount of increase in the volumetric capacity of the one airtight chamber 24-7R. When the volumetric capacity of the airtight chamber 24-7R is increased by movement of the movable partition wall 25-7 in the volumetric capacity increase direction, the total pressure P in the airtight chamber 24-7R decreases to P1 (< P). The pressure difference of the inside and the outside of the airtight container 22-7 by the pressure reduction introduces the gas g1 into the airtight chamber 24-7R (Fig. 16(b)). Namely, the gas g1 is the gas which is transmitted and separated from the gas G existing outside the airtight container 22-7 by the one gas separating membrane 21m-7R. By the gas introduction, the inside of the airtight chamber 24-7R is filled with the gas g1 On the other hand, by the movement of the movable partition wall 25-7 in the volumetric capacity decrease direction which is the opposite from the above description, the volumetric capacity in the airtight chamber 24-7R decreases and the total pressure of the gas g1 filled therein increases. When the total pressure reaches P2 from P1 as a result of the increase in the volumetric capacity, the relief valve 27-7R opens and releases the filled gas g1 to the outside (Fig. 16 (d)). From the above, takeout of the gas g1 from the one airtight chamber 24-7R is completed. Increase and decrease in the volumetric capacity of the other airtight chamber 24-7L are performed in the timing opposite from the increase and decrease in the volumetric capacity of the one airtight chamber 24-7R. By increase in the volumetric capacity, the total pressure P' in the other airtight chamber 24-7L reduces to P'1 to introduce the gas g1 into the inside (Fig. 16 (d)), and by decrease in the volumetric capacity, the total pressure P'1 in the airtight chamber 24-7L increases to P'2 to release the filled gas g1 to the outside of the airtight container 22-7 (Fig. 16 (b)). Introduction of the gas g1 is performed through the other gas separating membrane 21m-7, release of the gas g1 is performed through the other relief valve 27-7L. Thus, according to the gas separating device 1-7, the gas g1 can be taken out in each of the advancing movement and returning movement of the movable partition wall 25-7 , and therefore, as compared with, for example, the case where the gas g1 is to be taken out by movement in only one direction, the gas can be taken out with substantially doubled efficiency. However, the above described use method is preferably performed after the gas (atmospheric air) already existing in the airtight chamber 24-7R (airtight chamber 24-7L) is replaced with the gas g1 by performing idle reciprocating movement of the movable partition wall 25-7 several times. This is because the discharged gas immediately after the start of use is highly likely to be the mixture gas of the gas g1 and the existing gas, and therefore, by discharging such a mixture gas in advance by idle reciprocation, the gas g1 with high purity is obtained. The other modification examples which will be described later are the same in this respect.

### (Eighth modification example of the gas separating device)

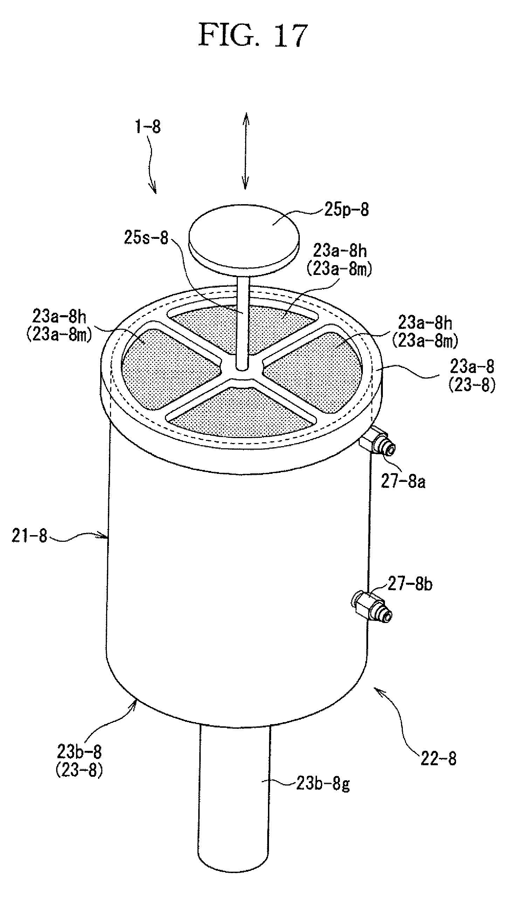

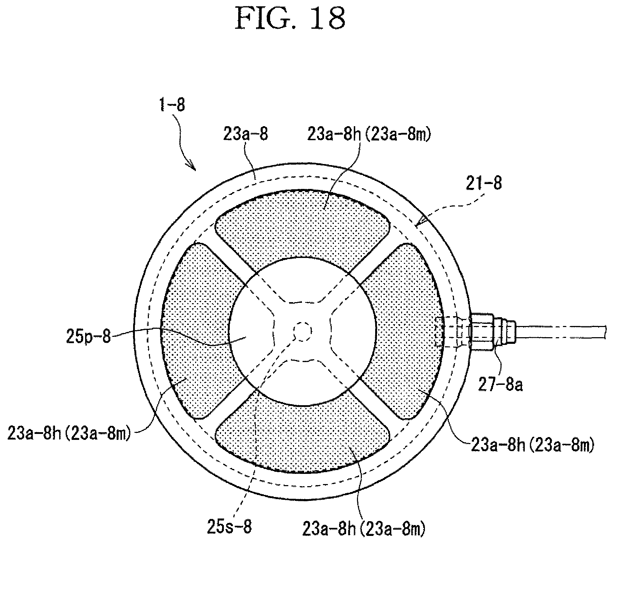

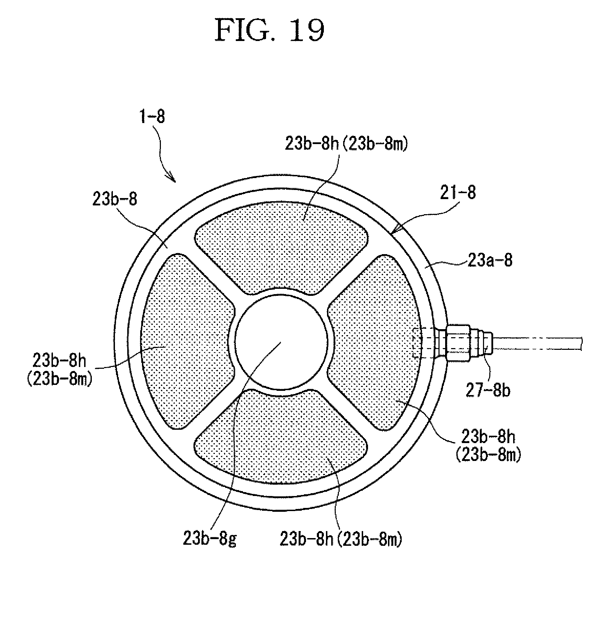

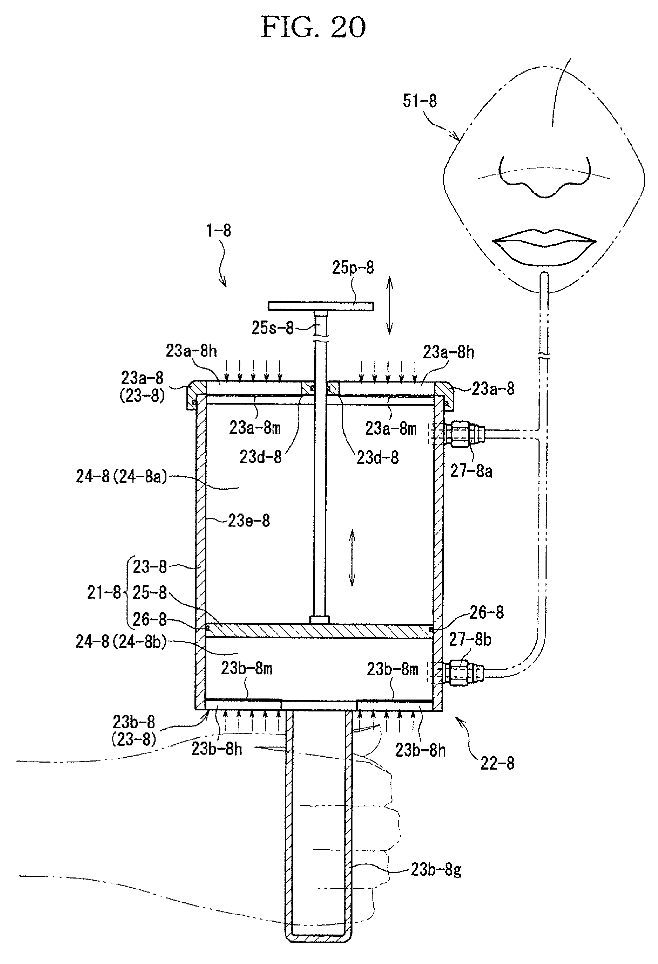

Referring to Figs. 17 to 20, a gas separating device 1-8 according to an eighth modification example will be described. Fig. 17 is a perspective view of the gas separating device 1-8. Fig. 18 is a plane view of the gas separating device 1-8. Fig. 19 is a bottom view of the gas separating device 1-8. Fig. 20 is a vertical sectional view of the gas separating device 1-8. The gas separating device 1-8 has the basic structure in common with the gas separating device 1-7. The kind of the gas or the like to be separated is not limited in its structure, but the gas separating device 1-8 introduced here is premised on separation of the oxygen enriched gas g1 from the atmospheric air G.

The gas separating device 1-8 includes an airtight container 22-8 with its inside and outside partitioned by a partition wall 21-8. The partition wall 21-8 is constructed by including a cylindrical fixed partition wall 23-8 having an airtight chamber (hollow part) 24-8, and a movable partition wall 25-8 which is in the airtight chamber 24-8 and is reciprocatingly slidable in the lengthwise direction of the airtight chamber 24-8 (vertical direction in Fig. 20) with respect to an inner peripheral surface 23e-8 of the fixed partition wall 23-8. Namely, the airtight chamber 24-8 is divided into an airtight chamber 24-8a and an airtight chamber 24-8b by the movable partition wall 25-8. Both ends of the fixed partition wall 23-8 is constructed to be able to keep airtightness in the normal state by a lid body 23a-8 that will be described later and a circular bottom part 23b-8. Namely, the lid body 23a-8 and the bottom part 23b-8 also have the function as the fixed partition wall. The shape of the bottom part 23b-8 is constructed to be circular because it is considered that when it is in the circular shape, airtightness assurance with the inner peripheral surface 23e-8 is relatively easy, but any shape other than the circular shape may be adopted, as long as it can ensure airtightness of the airtight chamber 24-8 in the airtight container 22-8. Since the shape of the bottom part 23b-8 is made circular, the shape of the fixed partition wall 23-8 is formed to be cylindrical correspondingly to this. The lid body 23a-8 is constructed to be threadedly fixable to an upper end portion of the fixed partition wall 23-8. It is made threadedly fixable to make it possible to easily attach and detach the lid body 23a-8 to and from the fixed partition wall 23-8, and this is made detachable to make it possible to incorporate the movable partition wall 25-8 in the inside of the airtight container 22-8 and perform maintenance of the inside when necessary.

An annular packing 26-8 is closely adhered and fixed to an outer periphery of the movable partition wall 25-8, and by the function of the annular packing 26-8, slide is made possible while close contact between the movable partition wall 25-8 and the inner peripheral surface 23e-8 is assured . By assurance of the close contact, airtightness of the airtight chamber 24-8 is kept. The annular packing 26-8 also constitutes a part of the partition wall 21-8. A plurality of vent holes 23a-8h, ·· are formed in the lid body 23a-8 to penetrate through it in the thickness direction, and a plurality of vent holes 23b-8h, ·· are formed in the bottom part 23b-8 to penetrate through it in the thickness direction. The vent holes 23a-8h, .. are airtightly closed by gas separating membranes 23a-8m, .., and the vent holes 23b-8h, .. are airtightly closed by gas separating membranes 23b-8m, ··. Namely, each of the gas separating membranes 23a-8m and each of the gas separating membranes 23b-8m have the function of partitioning the inside and the outside of the airtight container 22-8, and constitute a part of the partition wall 21-8. A slide bearing 23d-8 is buried and fixed in the center of the lid body 23a-8, and the slide bearing 23d-8 is a member for reciprocatingly sliding an operation stick designated by reference numeral and character 25s-8 in the thickness direction of the lid body 23a-8 (the movable direction of the movable partition wall 25-8) by applying an external force. One end of the operation stick 25s-8 at the side of the inside of the airtight container 22-8 is fixed to the movable partition wall 25-8, and an operation panel 25p-8 is fixed to one end at the side of the outside of the airtight container 22-8. The operation stick 25s-8 is constructed so as to reciprocatingly slide the movable partition wall 25-8 inside the airtight container 22-8 by its reciprocating slide, namely, so as to change the volumetric capacities relatively between the airtight chamber 24-8a and the airtight chamber 24-8b by reciprocatingly sliding the movable partition wall 25-8 so that the volumetric capacity of one of them decreases by the amount by which the volumetric capacity of the other one increases, though the volumetric capacity of the airtight chamber 24-8 closed by the movable partition wall 25-8 does not change. Reference numeral and character 27-8a designates a relief valve which allows the airtight chamber 24-8a and the outside to communicate with each other, and reference numeral and character 27-8b designates a relief valve which allows the airtight chamber 24-8b and the outside to communicate with each other. Further, reference numeral and character 23b-8g designates a grip (grip part) which is suspended from the center of the lower end surface of the bottom part 23b-8. The grip 23b-8g is for being held by a user with one hand (shown by the two-dot chain line in Fig. 20) and thereby allowing the airtight container 22-8 to be held upright. If it is held by one hand, the other disengaged hand can operate the operation stick 25s-8 (operation panel 25p-8), and therefore, usability of the gas separating device 1-8 can be enhanced. The gas separating device 1-8 by the manual operation and usable without a power supply is suitable for use, for example, under the situation with difficulty in obtaining a power supply as in the summit of a mountain and a disaster area.

A use method of the gas separating device 1-8 will now be described. When the operation panel 25p-8 is held by hand and is pressed in the downward direction in Fig. 20, with this, the movable partition wall 25-8 slides in the same direction with the operation stick 25s-8. Thereby, the volumetric capacity of the airtight chamber 24-8a increases and the total pressure of the inside is reduced to P1 from P. As a result of pressure reduction, the inside pressure becomes negative pressure with respect to the outside (atmospheric pressure), and the pressure difference separates and introduces the oxygen enriched gas g1 from the atmospheric air G into the airtight chamber 24-8a through the gas separating membrane 23a-8m. At this time, the relief valve 27-8a remains to be closed. Next, when the operation panel 25p-8 is lifted in the upward direction in Fig. 20 to slide the movable partition wall 25-8 in the same direction, the volumetric capacity of the airtight chamber 24-8a decreases, and the total pressure of the oxygen enriched gas g1 which is P1 increases to P2 to open the relief valve 27-8a, and as a result, the oxygen enriched gas g1 is discharged to the outside. Pressing-down of the above described operation panel 25p-8 increases the total pressure P'1 inside the airtight chamber 24-8b to P'2 to open the relief valve 27-8b. As a result, the oxygen enriched gas g1 existing inside the airtight chamber 24-8b is discharged to the outside. Lifting-up of the above described operation panel 25p-8 reduces the total pressure P' to P'1 with increase in the volumetric capacity of the inside of the airtight chamber 24-8b. The outside and inside pressure difference by pressure reduction separates and introduces the oxygen enriched gas g1 from the atmospheric air G into the airtight chamber 24-8b through the gas separating membranes 23b-8m. By repeating pressing-down and lifting-up of the operation panel 25p-8 described above, the oxygen enriched gas g1 can be taken out alternately from the relief valve 27-8a and the relief valve 27-8b. As compared with the case where the gas g1 is taken out by only one operation of pressing-down or lifting-up, the oxygen enriched gas g1 can be taken out by the operations in both directions, and therefore, it is very efficient. If the relief valve 27-8a and the relief valve 27-8b are connected by a tube to a gas supply tool (oxygen mask) 51-8 or the like as shown in Fig. 20, the oxygen enriched gas can be supplied to a human body continuously and efficiently.

### (Ninth modification example of the gas separating device)

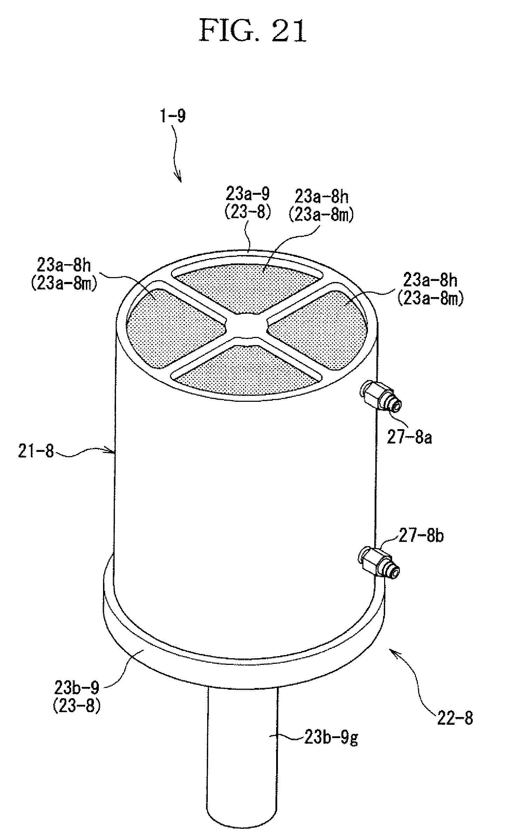

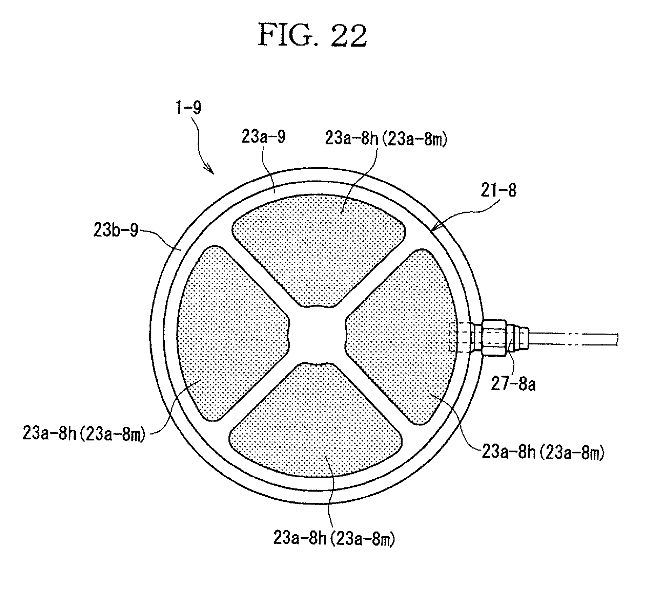

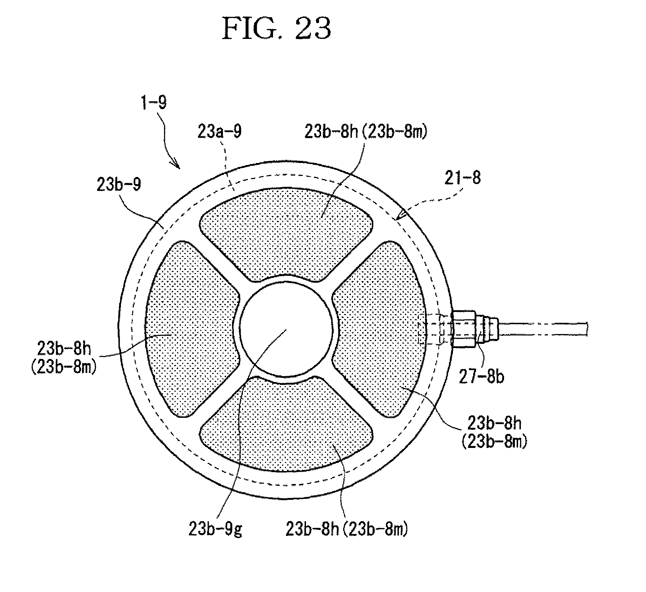

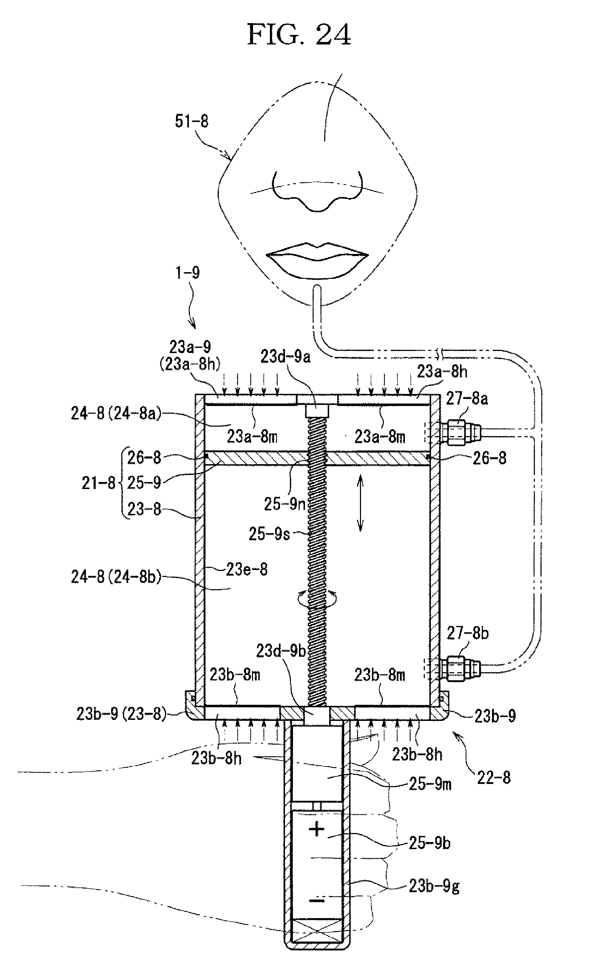

Referring to Figs. 21 to 24, a gas separating device 1-9 according to a ninth modification example will be described. Fig. 21 is a perspective view of the gas separating device 1-9. Fig. 22 is a plane view of the gas separating device 1-9. Fig. 23 is a bottom view of the gas separating device 1-9. Fig. 24 is a vertical sectional view of the gas separating device 1-9. The gas separating device 1-9 is what is made by adding improvement to the above described gas separating device 1-8. The gas separating device 1-9 differs from the gas separating device 1-8 only in the drive structure of the movable partition wall. Therefore, only the characteristics of the gas separating device 1-9 will be described hereinafter, for the member and structure common to the gas separating device 1-8, the reference numerals and characters and the like which are used in Figs. 17 to 20 are also used in Figs. 21 to 24, and explanation of them will be omitted.

Namely, the drive structure of a movable partition wall 25-9 according to the gas separating device 1-9 is generally constructed by a threaded hole 25-9n which penetrates through a center of the movable partition wall 25-9, a screw shaft 25-9s capable of being threadedly fitted in the threaded hole 25-9n, a bearing 23d-9a pivotally supporting one end of the screw shaft 25-9s at the side of a top plate part 23a-9 (upper side in Fig. 24), a bearing 23d-9b pivotally supporting one end of the screw shaft 25-9s at the side of a lid body 23b-9 (lower side in Fig. 24), a motor 25-9m for reversively rotating the screw shaft 25-9s, and a battery 25-9b for driving the motor. The drive shaft of the motor 25-9m is not seen in Fig. 24, but is constructed to be connected to the screw shaft 25-9s pivotally supported by the bearing 23d-9b to be integrally rotatable. The motor 25-9m and the battery 25-9b are housed in a grip 23b-9g suspended from the center of the lid body 23b-9. The battery 25-9s may be a rechargeable battery or a non-rechargeable battery. Though not shown in the drawings, a drive switch and a changeover switch of the rotational direction are mounted to the motor 25-9m. In this manner, the grip 23b-9g has both the function as the grip part and the function as the housing part for the motor and the like. When the screw shaft 25-9s is rotated by driving the motor 25-9m, screw action works between the screw shaft 25-9s and the threaded hole 25-9n (movable partition wall 25-9) which is threadedly fitted therein, and reciprocatingly moves (vertical movement in Fig. 24) the movable partition wall 25-9 correspondingly to the rotating direction. The above described threaded hole 25-9n, screw shaft 25-9s, bearing 23d-9a, and bearing 23d-9b are constructed to function as a jack structure which increases motive power of the motor 25-9m. The discharge action of the oxygen enriched gas g1 by the vertical movement of the movable partition wall 25-9 does not differ from the discharge action of the above described movable partition wall 25-8. The gas separating device 1-9 which drives by the motor 25-9m includes the advantage of requiring less labor as compared with the gas separating device 1-8 which manually drives.

### (Tenth modification example of the gas separating device)

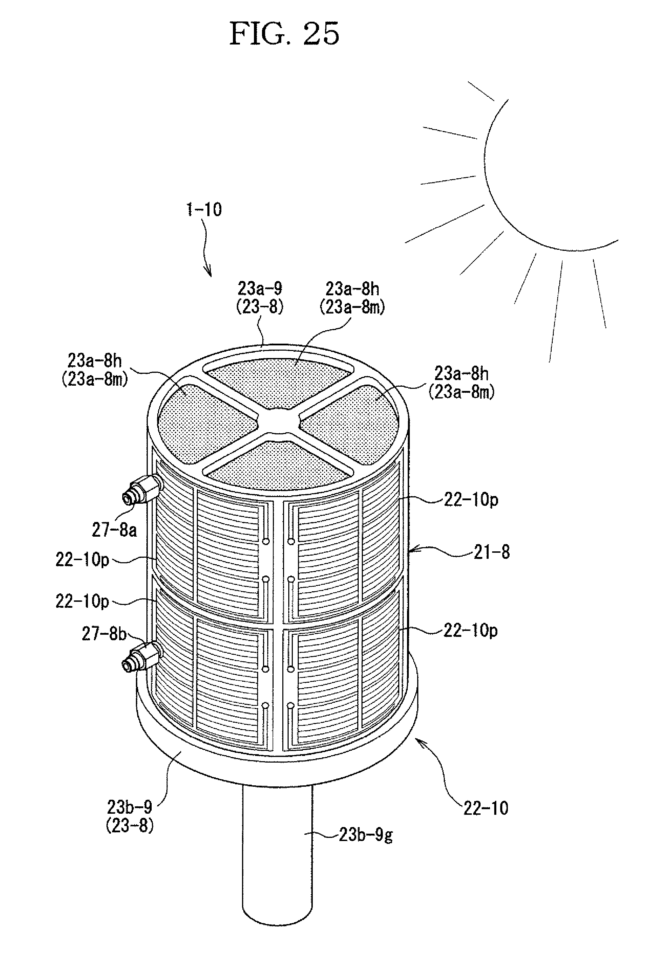

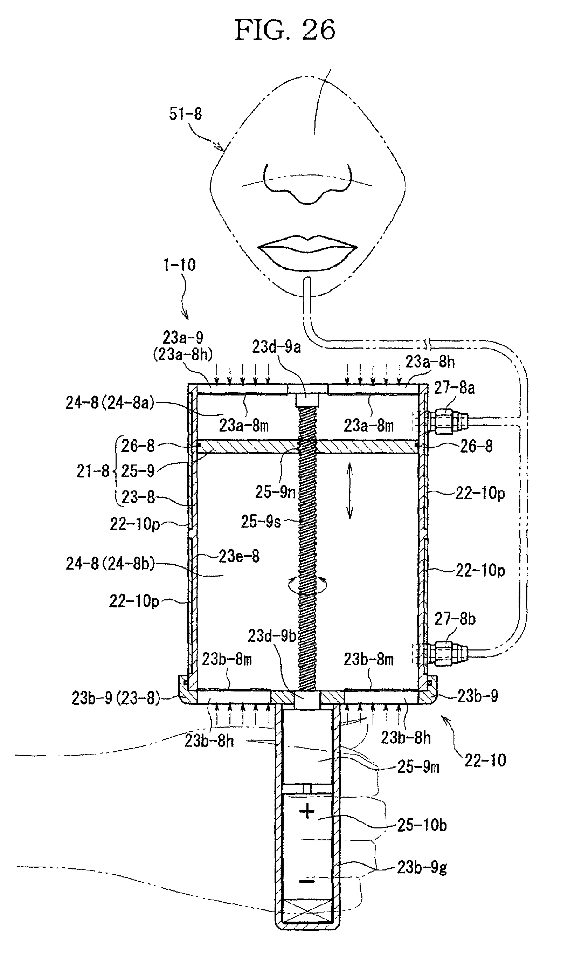

Referring to Figs. 25 and 26, a gas separating device 1-10 according to a tenth modification example will be described. Fig. 25 is a perspective view of the gas separating device 1-10. Fig. 26 is a vertical sectional view of the gas separating device 1-10. The gas separating device 1-10 is what is made by adding improvement to the gas separating device 1-9 described above. The improved respect is that a solar panel which is not owned by the gas separating device 1-9 is provided at the gas separating device 1-10. Therefore, only the solar panel and its related members will be described hereinafter. For the member common to the gas separating device 1-9 and the gas separating device 1-10, the same reference numerals and characters as those used in Figs. 21 to 24 are only written in Figs. 25 and 26, and the explanation of these members will be omitted.

Namely, a battery 25-10b which the gas separating device 1-10 includes is constructed by a chargeable battery, and its charge is designed to be performed by a solar panel 22-10p provided on an outer periphery of the partition wall 21-8 of the airtight container 22-10. According to the gas separating device 1-10, when the grip 23b-9g is gripped and light is applied to the solar panel 22-10p, the generated electricity is charged into the battery 25-lOb, and therefore, replacement of the battery is not required. In the place where the power supply is difficult to obtain such as the summit of a mountain, and a disaster area, long-time use is made possible.

### (Eleventh modification of the gas separating device)

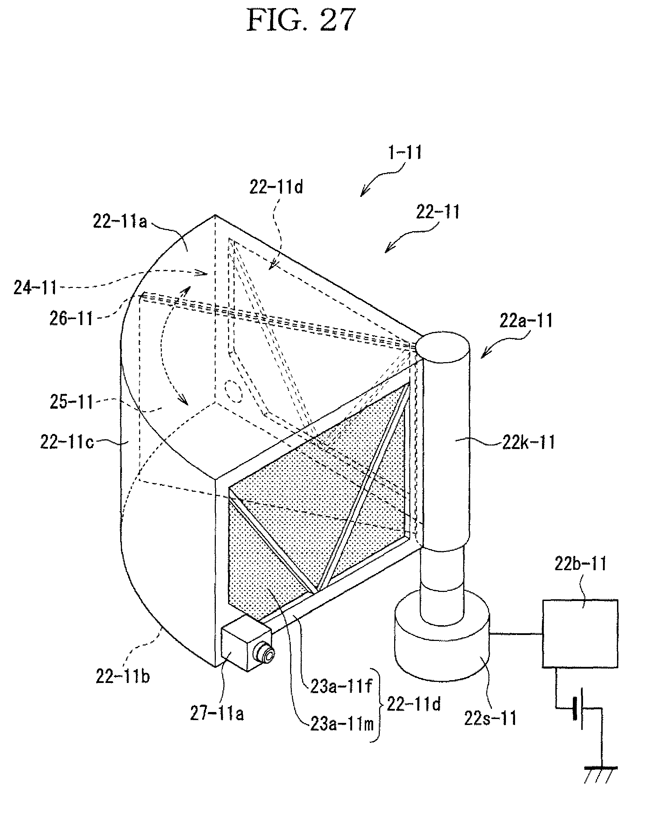

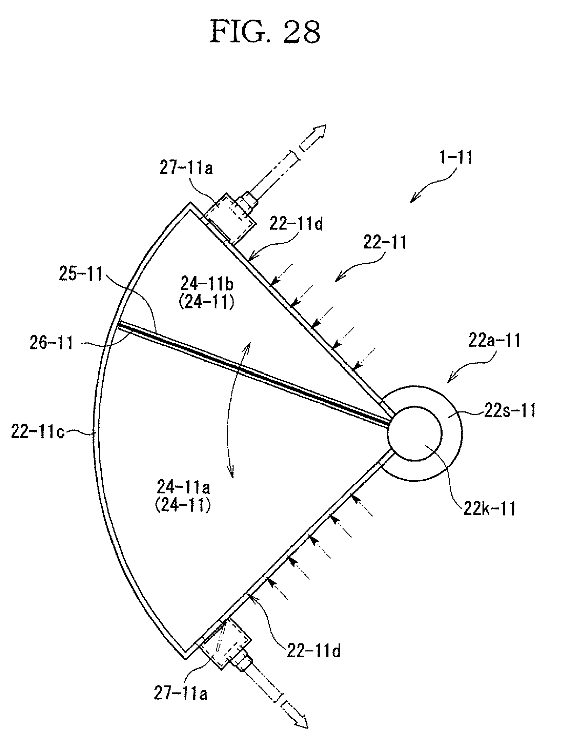

Referring to Figs. 27 and 28, a gas separating device 1-11 according to an eleventh modification example will be described. Fig. 27 is a perspective view of the gas separating device 1-11. Fig. 28 is a plane view of the gas separating device 1-11 with the top plate omitted. The gas separating device 1-11 is externally constructed by an airtight container 22-11 which is a sector-shape in plane view, a drive structure 22a-11 disposed in a center of the sector shape of the airtight container 22-11, and a power supply part 22b-11.

The airtight container 22-11 is constructed by a sector-shaped top plate part 22-11 a, a sector-shaped bottom plate part 22-11b, an arc side wall part 22-11c which connects an arc side of the top plate part 22-11a and an arc side of the bottom plate part 22-11b, and side wall parts 22-11d and 22-11d which connect a linear side of the top plate part 22-11a and a linear side of the bottom plate part 22-11b, and the above described respective members function as the fixed partition wall. Each of the side wall parts 22-11d is generally constructed by a gas separating membrane 23a-11m which occupies a substantially whole of it, and a frame 23a-11f for holding the gas separating membrane 23a-11m. All of the above described respective members constitute the partition wall of the airtight container 22-11, and the inside of the airtight container 22-11 constitutes an airtight chamber 24-11, respectively. In the airtight container 22-11, a movable partition wall 25-11 capable of airtightly dividing the airtight chamber 24-11 (24-11 a, 24-11b) is disposed. In the movable partition wall 25-11, one end in plane view is rotatably supported at the drive structure 22a-11, and the other end slidably abuts on the inner wall of the arc side wall part 22-11c via a laterally U-shaped packing 26-11. The packing 26-11 has the function of slidably and airtightly closing the top plate part 22-11a and the bottom plate part 22-11 b, and the movable partition wall 25-11. Relief valves 27-11a are mounted to the respective frames 23a-11f, and they are constructed to be capable of allowing the airtight chambers 24-11 a and 24-11b to communicate with the outside. The movable partition wall 25-11 constitutes the partition wall in the eleventh modification example together with the fixed partition wall constructed by the above described top plate part 22-11 a and the like.

The drive structure 22a-11 is constructed by a rotary solenoid 22s-11 disposed at the base part as a main member, and the rotary solenoid 22s-11 which receives supply of electricity from a power supply part 22b-11 has the function of reciprocatingly rotating the movable partition wall 25-11 along the arc side via a mechanism part 22k-11. Rotation of the movable partition wall 25-11 around the drive structure 22a-11 reciprocatingly moves the tip end portion along the arc side wall part 22-11c. The reciprocating movement increases and decreases the relative volumetric capacities of the airtight chamber 24-11a and the airtight chamber 24-11 b. Increase and decrease in relative volumetric capacities discharge the oxygen enriched gas g1 which is separated and introduced through the gas separating membranes 23a-11m and 23a-11m, to the outside from the relief valve 27-11a, 27-11a by the same principle as the operational principle of the gas separating device 1-7.

## Claims

1. A gas separating device, comprising:
an airtight container including an inside partitioned from an outside by a partition wall;
a gas outlet valve provided at the partition wall; and
a gas separating membrane constituting at least a part of the partition wall,
wherein the partition wall is constructed to move and/or deform at least partially by action of an external force to be able to decrease an internal volumetric capacity of the airtight container;
wherein the gas separating membrane is constructed to be able to separate and discharge at least a part of a gas g1 included in a gas G to the outside of the airtight container from the gas G sealed in the inside of the container when total pressure P of the inside of the airtight container becomes total pressure P 1 (P < P1) or higher due to decrease in the volumetric capacity; and
wherein the gas outlet valve is constructed to allow the inside the airtight container and the outside to communicate with each other to be able to discharge a gas g2 remaining in the inside of the airtight container to the outside when the total pressure of the inside of the airtight container becomes P2 (P2 > P1) due to further decrease in the volumetric capacity of the inside of the airtight container.

2. The gas separating device according to claim 1,
wherein an external force is designed to act on said partition wall via a jack structure.

3. The gas separating device according to claim 1 or 2,
wherein the total pressure P2 when said gas outlet valve allows the inside of said airtight container and the outside to communicate with each other is designed to be able to be set to be variable.

4. The gas separating device according to any one of claims 1 to 3,
wherein said gas separating membrane is reinforced by a gas permeable reinforcing membrane.

5. The gas separating device according to any one of claims 1 to 4,
wherein said partition wall, which is moved and/or deformed, is constructed to be returnable from a moved position and/or a deformed state by removing the action of the external force.

6. The gas separating device according to claim 5,
wherein said partition wall is provided with a check valve that opens when said partition wall, which is moved and/or deformed, returns, and introduces a gas existing in the outside of the airtight container into the inside of the airtight container.

7. The gas separating device according to claim 5 or 6, further comprising:
a returning member for automatically returning said partition wall.

8. The gas separating device according to any one of claims 5 to 7,
wherein said partition wall is constructed by including a bottomed cylindrical fixed partition wall having a hollow part, and a movable partition wall reciprocatingly slidable while keeping an airtight state in a lengthwise direction of the hollow part with respect to an inner peripheral surface of the fixed partition wall in the hollow part of the fixed partition wall.

9. The gas separating device according to any one of claims 5 to 7,
wherein at least a part of said partition wall is constructed by an elastic member which deforms to be returnable.

10. The gas separating device according to claim 5 or 6,
wherein whole of said partition wall is constructed by an elastic reinforcing membrane which has gas permeability and returnably deforms, and a gas separating membrane which is stuck to an inner wall of the elastic reinforcing membrane.

11. The gas separating device according to any one of claims 5 to 7,
wherein said partition wall is constructed by including a cylindrical bellows partition wall which is extendable and contractible, and a pair of opposed partition walls which airtightly close an upper end and a lower end of the bellows partition wall.

12. The gas separating device according to claim 11,
wherein said bellows partition wall is constructed by including an elastic reinforcing membrane which has gas permeability and returnably deforms, and a gas separating membrane which is stuck to an inner surface of the elastic reinforcing membrane.

13. The gas separating device according to any one of claims 1 to 12,
wherein said gas G is atmospheric air, and said gas g1 is oxygen.

14. The gas separating device according to any one of claims 1 to 12,
wherein said gas G is atmospheric air, and said gas g1 is vapor.

15. The gas separating device according to any one of claims 1 to 14,
wherein an auxiliary airtight container capable of receiving therein a gas g2 discharged from said airtight container is connected to said airtight container;
wherein the auxiliary airtight container is constructed by including
a partition wall that partitions an inside and an outside of the auxiliary airtight container,
a gas outlet valve provided at the partition wall, and
a gas separating membrane which constitutes at least a part of the partition wall;
wherein the partition wall is constructed to move and/or deform at least partially by action of an external force to be able to decrease an internal volumetric capacity of the airtight container;
wherein the gas separating membrane is constructed to be able to separate and discharge at least a part of a gas g'1 included in the gas g2 from the gas g2 sealed in the inside of the container to the outside of the airtight container when total pressure P' of the inside of the airtight container becomes total pressure P'1 (P' < P'1) or higher due to decrease in the volumetric capacity; and
the gas outlet valve is constructed to allow the inside of the airtight container and the outside to communicate with each other to be able to discharge a gas g'2 remaining in the inside of the airtight container to the outside when the total pressure of the inside of the airtight container becomes P'2 (P'2 > P'1) due to further decrease in the volumetric capacity of the inside of the airtight container.

16. The gas separating device according to claim 13,
wherein said gas outlet valve is constructed to be able to be mounted with a nozzle or to be integrated with a nozzle structure.

17. The gas separating device according to claim 16,
wherein said nozzle or nozzle structure is constructed to be inserted into a ball for ball game or a valve of a rubber tire to be able to fill a gas therein.

18. The gas separating device according to any one of claims 1 to 12, further comprising:
an airtight container for a separated gas capable of storing the gas g1 which is separated and discharged through said gas separating membrane from the inside of said airtight container; and
a separated gas outlet valve provided in the airtight container for the separated gas.

19. The gas separating device according to claim 18,
wherein said airtight container for the separated gas is provided side by side with said airtight container with said gas separating membrane therebetween; and
wherein an internal volumetric capacity of the airtight container for the separated gas is designed to be able to decrease or increase in accordance with increase or decrease of the internal volumetric capacity of said airtight container by movement and/or deformation of said gas separating membrane.

20. The gas separating device according to claim 19,
wherein said airtight container and said airtight container for the separated gas are constructed to be able to be partitioned from each other by a movable partition wall in an inside of an airtight cylindrical body; and
at least a part of the movable partition wall is constructed by a gas separating membrane, and the movable partition wall is constructed to be reciprocatingly slidable in a lengthwise direction of the airtight cylindrical body with respect to an inner peripheral surface of the airtight cylindrical body.

21. The gas separating device according to claim 20,
wherein said separated gas outlet valve is constructed to allow an inside of the airtight container for the separated gas and the outside to communicate with each other to be able to discharge the gas g1 remaining in the inside of the airtight container for the separated gas to the outside when the total pressure of the gas g1 separated and discharged into said airtight container for the separated gas exceeds predetermined pressure due to decrease in the volumetric capacity of the inside of the airtight container for the separated gas by return of said movable partition wall.

22. The gas separating device according to claim 20 or 21,
wherein said separated gas outlet valve is constructed to be able to be mounted with a nozzle or to be integrated with a nozzle structure.

23. The gas separating device according to any one of claims 18 to 22,
wherein said gas G is atmospheric air, and said gas g1 is oxygen.

24. The gas separating device according to claim 23,
wherein said nozzle or nozzle structure is constructed to be connectable to a gas supply tool for supplying said gas g1 to a human body.

25. A gas separating device, comprising:
an airtight container including an inside partitioned from an outside by a partition wall;
a gas outlet valve provided at the partition wall; and
a gas separating membrane that constitutes at least a part of the partition wall,
wherein the partition wall is constructed to move and/or deform at least partially by action of an external force to be able to decrease or increase an internal volumetric capacity of the airtight container;
wherein a predetermined gas included in a gas existing in the inside of the airtight container is designed to be transmittable to the outside of the airtight container by pressure increase of the inside of the airtight container accompanying decrease in the volumetric capacity, or a predetermined gas included in a gas existing in the outside of the airtight container is designed to be transmittable into the inside of the airtight container through the gas separating membrane by pressure reduction of the inside of the airtight container accompanying increase in the volumetric capacity; and
wherein the gas in the inside of the airtight container is designed to be able to be taken out through the gas outlet valve.

26. A gas separating device, comprising:
an airtight container including an inside partitioned from an outside by a partition wall;
a gas separating membrane that constitutes at least a part of the partition wall; and
a covering member capable of airtightly covering the gas separating membrane from the outside or the inside,
wherein the partition wall is constructed to move and/or deform at least partially by action of an external force to be able to decrease an internal volumetric capacity of the airtight container;
wherein a predetermined gas included in a gas existing in the inside of the airtight container is designed to be transmittable to the outside of the airtight container by pressure increase of the inside of the airtight container accompanying decrease in the volumetric capacity; and
wherein the covering member is constructed to be able to partition the inside of the airtight container and the outside in place of the gas separating membrane by covering the gas separating membrane from the inside of the airtight container or the outside.

27. The gas separating device according to claim 26,
wherein said airtight container is constructed to be able to house a stored material; and
wherein said partition wall is constructed to be movable and/or deformable without being influenced by the stored material which is housed therein.

28. The gas separating device according to claim 26 or 27,
wherein the gas existing in the inside of said airtight container is atmospheric air, and said predetermined gas is oxygen.

29. The gas separating device according to claim 28,
wherein the stored material housed in said airtight container is food.

30. A gas separating method comprising the steps of:
preparing an airtight container in which at least a part of a partition wall partitioning an outside and an inside is constructed by a gas separating membrane, and a gas outlet valve is provided at the partition wall;
increasing or reducing pressure of the inside of the airtight container by decreasing or increasing a volumetric capacity of a gas sealed in the airtight container by action of an external force;
separating and discharging, or separating and absorbing a predetermined gas through the gas separating membrane by a pressure difference between the inside of the airtight container and the outside with the gas separating membrane therebetween; and
taking out the gas existing in the airtight container through the gas outlet valve.

31. The gas separating method according to claim 30,
wherein said gas outlet valve is constructed to be openable when total pressure of the inside of the airtight container reaches predetermined pressure by decreasing a volumetric capacity of the gas after separation and discharge, or separation and absorption of the predetermined gas, sealed in the inside of said airtight container, by action of an additional external force.

32. The gas separating method according to claim 30 or 31,
wherein the gas sealed in said airtight container is atmospheric air, and said predetermined gas is oxygen.

33. A gas separating device, comprising:
an airtight container including an airtight chamber partitioned from an outside by a partition wall;
a movable partition wall that is inside the airtight chamber and airtightly separates the airtight chamber into one airtight chamber and the other airtight chamber;
a drive structure that reciprocatingly moves the movable partition wall in the airtight chamber;
one gas separating membrane that constitutes at least a part of the partition wall which partitions the one airtight chamber and the outside;
the other gas separating membrane that constitutes at least a part of the partition wall which partitions the other airtight chamber and the outside;
one check valve that is provided at the partition wall to take out a gas existing inside the one airtight chamber to the outside; and
the other check valve that is provided at the partition wall to take out a gas existing inside the other airtight chamber to the outside,
wherein the movable partition wall is constructed to be able to change a volumetric capacity ratio of the one airtight chamber and the other airtight chamber in the airtight chamber while keeping airtightness by movement by the drive structure;
wherein the one gas separating membrane is constructed to be able to separate and introduce a gas g1 included in a gas G into the inside of the one airtight chamber from the gas G into the one airtight chamber when total pressure P of the inside of the one airtight chamber becomes total pressure P1 (P > P1) or lower by increase in a volumetric capacity by movement of the movable partition wall;
wherein the other gas separating membrane is constructed to be able to separate and introduce the gas g1 included in the gas G into the inside of the other airtight chamber from the gas G into the other airtight chamber when total pressure P' of the inside of the other airtight chamber becomes total pressure P'1 (P' > P'1) or lower by increase in a volumetric capacity by movement of the movable partition wall;
wherein the one check valve is constructed to allow the inside of the one airtight chamber and the outside to communicate with each other to be able to discharge the gas g1 existing in the inside of the one airtight chamber to the outside when the total pressure P1 of the inside of the one airtight chamber becomes P2 (P2 > P1) by decrease in the volumetric capacity of the inside of the one airtight chamber by the movement of the movable partition wall; and
wherein the other check valve is constructed to allow the inside of the other airtight chamber and the outside to communicate with each other to be able to discharge the gas g1 existing in the inside of the one airtight chamber when the total pressure P'1 of the inside of the other airtight chamber becomes P'2 (P'2 > P'1) by decrease in the volumetric capacity of the inside of the other airtight chamber by the movement of the movable partition wall.

34. The gas separating device according to claim 33,
wherein said drive structure is constructed by including a jack structure disposed at the outside of said airtight container.

35. The gas separating device according to claim 33 or 34,
wherein said one and other gas separating membranes are respectively reinforced by gas permeable reinforcing membranes.

36. The gas separating device according to any one of claims 33 to 35,
wherein said drive structure is constructed by including a motor or a solenoid which is to be a drive source, and
a power supply for driving the motor or the solenoid.

37. The gas separating device according to claim 36,
wherein said power supply is constructed by including a battery charger, and
a solar panel that is installed on an outer periphery of said partition wall and is electrically connected to the battery charger.

38. The gas separating device according to any one of claims 33 to 37,
wherein said gas G is atmospheric air, and said gas g1 is an oxygen enriched gas.

39. The gas separating device according to claim 38,
wherein said one and other check valves are connected to a gas supply tool capable of sequentially supplying the gas g1 taken out through the one check valve and the gas g 1 taken out through the other check valve to a human body.
